(19) **Europäisches Patentamt**
**European Patent Office**
**Office européen des brevets**

(11) **EP 2 775 367 B1**

(12) **FASCICULE DE BREVET EUROPEEN**

(45) Date de publication et mention
de la délivrance du brevet:
**07.09.2016 Bulletin 2016/36**

(51) Int Cl.:
***G05D 1/06*** *(2006.01)* ***B64C 19/00*** *(2006.01)*

(21) Numéro de dépôt: **14000638.8**

(22) Date de dépôt: **24.02.2014**

(54) **Procédé de guidage d'un giravion limitant les nuisances sonores en procédure d'approche d'un point de posé**

Steuerverfahren eines Drehflügelflugzeugs, das die Lärmbelästigung beim Annähern an einen Landepunkt begrenzt

Rotorcraft guidance method, reducing noise annoyance during the approach procedure to a landing point

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.03.2013 FR 1300472**

(43) Date de publication de la demande:
**10.09.2014 Bulletin 2014/37**

(73) Titulaire: **Airbus Helicopters**
**13725 Marignane Cedex (FR)**

(72) Inventeurs:
• **Feyzeau, Pierre**
**13880 Velaux (FR)**

• **Poudrai, Etienne**
**13004 Marseille (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 0 945 841 US-A1- 2009 043 431**
**US-A1- 2012 296 499**

**Description**

La présente invention est du domaine des procédés et des systèmes de guidage sur trajectoire d'un aéronef, giravion plus spécifiquement, en phase d'approche d'un point de posé. La présente invention relève plus spécifiquement de tels procédés et systèmes organisés pour limiter les nuisances sonores générées par le giravion dans l'environnement proche d'un tel point de posé, hélisurface ou héliport notamment.

Les conditions d'évolution d'un giravion en approche ou en éloignement d'un point de posé identifié et répertorié sont couramment réglementées. Dans ce contexte, il est habituel d'établir des procédures d'atterrissage pour assister le pilote dans le guidage du giravion selon la configuration spécifique de l'environnement proche du point de posé.

Il est par exemple connu une approche vers un point de posé donné selon une procédure dite de vol à vue (VFR d'après l'acronyme anglais Visual Flight Rules). En procédure de vol à vue, le pilote du giravion se réfère à des consignes prédéfinies d'approche et à des références visuelles extérieures, sans disposer d'assistance fournie par un équipement de bord dédié à une gestion automatisée d'une trajectoire d'approche à suivre. Une telle procédure d'approche en vol à vue nécessite pour le pilote une visibilité satisfaisante du point de posé à atteindre.

Il est par exemple encore connu une approche vers un point de posé donné selon une procédure de vol aux instruments (IFR d'après l'acronyme anglais Instrument Flight Rules). Dans ce cas, le pilote dispose d'un équipement de bord permettant de guider le giravion le long d'une trajectoire d'approche prescrite pour rejoindre le point de posé.

La trajectoire d'approche est définie par une route d'approche issue d'une base de données aéronautique. Sur consigne d'un personnel au sol gestionnaire du trafic aérien, le pilote sélectionne dans la base de données aéronautique une route d'approche que doit suivre le giravion vers le point de posé. La route d'approche est communément subdivisée en plusieurs segments selon l'identification de plusieurs points de route. Il est notamment défini :

-) un segment initial d'approche délimité entre un point initial d'approche IAF (d'après l'acronyme anglais Initial Approach Fix) et un point intermédiaire IF (d'après l'acronyme anglais Intermediate Fix),

-) un segment intermédiaire délimité entre le point intermédiaire IF et un point final d'approche FAF (d'après l'acronyme anglais Final Approach Fix), et

-) un segment final d'approche FAS (d'après l'acronyme anglais Final Approach Segment), défini entre le point final d'approche FAF et une hauteur de décision ou un point de décision. Le point de décision est identifié par des coordonnées repérées dans un référentiel géodésique prédéfini selon une limite de hauteur-sol qu'un pilote guidant le giravion prend en compte pour estimer s'il achève ou non l'approche du giravion vers le point de posé. Il est courant de définir le point de décision conformément à une altitude minimale de descente MDA (d'après l'acronyme anglais Minimum Descent Altitude).

Par ailleurs, la position courante du giravion est détectée, notamment au moyen d'une instrumentation de bord du giravion comprenant par exemple un système de navigation satellitaire, tel qu'un système GNSS (d'après l'acronyme anglais Global Navigation Satellite System). Le giravion est alors guidé par le pilote vers le point de posé en minimisant l'écart entre la position courante du giravion et la trajectoire d'approche préalablement élaborée par les moyens de calcul.

Il est à considérer que le guidage du giravion est potentiellement opéré par un pilote humain assisté par des moyens d'affichage des informations nécessaires à l'exécution de ces procédures, et/ou est potentiellement opéré au moins en partie jusqu'au point de décision par l'intermédiaire de fonctions spécifiques mises en oeuvre par un pilote automatique.

Pour guider un giravion conformément à une trajectoire d'approche, il doit être pris en compte la présence fréquente de vent dont les caractéristiques sont identifiées en vitesse et en direction par une instrumentation de bord du giravion notamment. Il est réputé que les caractéristiques du vent varient selon la localisation géographique du point de posé et de manière évènementielle selon les conditions climatiques.

Or, le vent influe sur la progression du giravion. En conséquence, la position du giravion doit être rectifiée en permanence par le pilote selon les caractéristiques du vent mesurées à bord du giravion, pour maintenir la progression du giravion conformément à la trajectoire d'approche. Plus particulièrement, le pilote corrige en permanence un éventuel écart de position entre la position courante du giravion et la trajectoire d'approche préalablement élaborée, selon les effets du vent sur la progression du giravion dont les caractéristiques sont mesurées par une instrumentation de bord.

Par ailleurs, parmi les conditions réglementées de progression d'un giravion dans l'environnement proche d'un point de posé, il est encore identifié selon la réglementation locale un seuil minimal toléré de nuisances sonores générées par le giravion. Au-delà des contraintes réglementaires, il est souhaitable de réduire au mieux les nuisances sonores générées par le giravion dans l'environnement proche d'un point de posé.

Or, les nuisances sonores générées par les giravions sont particulièrement perceptibles en phase d'atterrissage, en raison du mode de fonctionnement du rotor en phase de descente du giravion et en raison de la position du giravion en approche vers le sol. Pour limiter les effets des nuisances sonores générées par le giravion, il doit être pris en compte non seulement les bruits produits par le giravion mais aussi les conditions de propagation vers le sol des bruits générés.

Il est connu de limiter les nuisances sonores produites par un giravion en phase d'approche ou en phase d'éloignement d'un point de posé. A cette fin, il est connu d'élaborer une trajectoire d'approche conforme à la route d'approche prenant en compte une progression du giravion générant des nuisances sonores au sol restreintes. Ces dispositions visent à limiter les nuisances sonores subies par les riverains à un seuil de nuisances sonores tolérées prédéfini.

A cet effet, il est connu d'exploiter une base annexe de données répertoriant des domaines de vol du giravion à éviter car générateurs de nuisances sonores jugées excessives au regard d'un seuil de nuisances sonores prédéfinies. Les dits domaines de vol sont identifiés selon des modes de progression d'un giravion de structure et de masse données progressant le long d'une pente sol donnée. A partir de la base annexe de données, une trajectoire d'approche du giravion peut être élaborée conformément à une route d'approche préalablement sélectionnée.

On pourra à ce propos se référer au document EP1730032 (EUROCOPTER FRANCE), qui décrit une telle base annexe de données répertoriant de dits domaines de vol à exclure dans la définition d'une trajectoire d'approche, car identifiés comme générateurs de nuisances sonores excessives.

Par ailleurs, il est encore connu de définir une trajectoire d'approche d'un giravion fondée sur une sélection d'une ou de plusieurs routes d'approches préalablement identifiées pour un point de posé donné. Ladite sélection est opérée en fonction de mesures au sol en temps réel du bruit produit par le giravion, de sorte que les nuisances sonores générées par le giravion en approche du point de posé soient limitées.

On pourra à ce propos se référer aux documents EP0945841 (INST. ADV. TECH. HELICOPTER) et JP2736045 (COMMUTER HERIKOPUTA SENSHIN GI), qui décrivent de telles modalités d'élaboration d'une trajectoire d'approche d'un giravion vers un point de posé limitant les nuisances sonores générées par le giravion.

Il est aussi connu par le document US 2012/296499 (KIRCHHOFER Alain) d'élaborer et d'afficher une route à suivre par un giravion, en évitant de survoler des sites sensibles vis-à-vis des nuisances sonores générées par le giravion. Lesdits sites sensibles sont préalablement identifiés selon le bruit communément produit par le giravion en vol et sont affichés conjointement avec la route à suivre en surimpression d'une cartographie du terrain survolé.

Dans ce contexte, le but de la présente invention est de proposer un procédé et un système de guidage d'un giravion en approche d'un point de posé identifié, limitant au mieux les nuisances sonores générées par le giravion.

Le procédé de la présente invention est plus particulièrement un procédé de guidage d'un giravion par rapport à un point de posé préalablement identifié, conformément à une procédure d'atterrissage procurant une réduction optimisée des nuisances sonores générées par le giravion.

Le procédé de la présente invention est un procédé comprenant les opérations suivantes :

-) au moins une opération de sélection en vol d'une route d'approche préalablement identifiée pour le point de posé. La route d'approche est sélectionnée parmi une pluralité de routes d'approche répertoriées par une base de données aéronautique et propres à des points de posé identifiés. La route d'approche sélectionnée définit une pente sol ne devant pas être franchie vers le sol par le giravion depuis un point final d'approche vers un point de décision.

-) au moins une opération de calcul en vol d'une trajectoire d'approche conforme à la route d'approche préalablement sélectionnée. L'opération de calcul de la trajectoire d'approche prend en compte une combinaison entre divers critères. Parmi ces critères, il est notamment pris en compte au moins la pente sol définie par la route d'approche préalablement sélectionnée, la masse courante du giravion et un critère de moindre bruit relatif à un mode de progression du giravion identifié comme étant générateur de moindre bruit au regard d'un seuil prédéfini du bruit produit par le giravion.

-) au moins une opération de repérage d'une position courante du giravion par une instrumentation de bord du giravion, tel qu'un système de navigation satellitaire.

-) une opération de guidage du giravion le long de la trajectoire d'approche préalablement calculée en corrigeant la position du giravion selon les effets sur sa progression d'une variation des caractéristiques du vent identifiées par l'instrumentation de bord du giravion.

Selon la présente invention, le giravion est doté d'une base annexe de données répertoriant une pluralité de trajectoires types définies pour au moins un giravion de référence de structure donnée correspondante à la structure du giravion en approche du point de posé.

Il est évidemment compris qu'une telle base annexe de données est construite préalablement à son exploitation à bord du giravion, telle que par exemple par application de la méthode décrite par le document EP1730032.

Les trajectoires types sont définies par application du dit critère de moindre bruit selon au moins une pente sol donnée, selon une masse donnée du giravion de référence et selon un critère de vent relatif aux effets produits par un vent de caractéristiques données sur une masse d'air à l'intérieur de laquelle évolue le giravion de référence.

Dans ce contexte, le procédé de la présente invention comprend les opérations suivantes effectuées en approche du giravion vers le point de posé :

-) déterminer un modèle de vent représentatif de l'évolution des caractéristiques du vent définies en vitesse et en direction, entre une position courante du giravion et le point de posé,

-) identifier dans la base annexe de données au moins une trajectoire type définie pour le giravion vis-à-vis de sa structure, par application du critère de moindre bruit selon au moins ladite pente sol de la route d'approche préalablement sélectionnée, selon la masse courante du giravion et selon le modèle de vent préalablement déterminé, puis

-) calculer au moins une dite trajectoire d'approche à compter d'une position courante du giravion située en amont du point final d'approche, selon au moins trois segments successifs comprenant suivant le sens de progression du giravion vers le point de posé :

a) un segment amont, dont l'extension est calculée par application de la trajectoire type préalablement identifiée entre une position courante du giravion et un segment transitoire.

b) un segment transitoire, s'étendant entre un point d'extrémité aval du segment amont et un point d'extrémité amont d'un segment aval de la trajectoire d'approche. Le segment transitoire est calculé inscrit dans un espace de vol autorisé du giravion délimité entre la pente sol et une pente limite passant par le point d'extrémité amont du segment aval. Le segment transitoire est calculé en excluant de son extension une application de la trajectoire type et par identification d'un point transitoire déterminé par intersection entre d'une part la trajectoire d'approche et d'autre part l'une quelconque de la pente sol ou la pente limite.

c) le dit segment aval, qui est un segment dont l'extension est prédéfinie par rapport au point de décision selon les capacités propres du giravion à rejoindre en vol stabilisé le point de décision depuis le point d'extrémité amont du segment aval.

Il est évidemment compris que les notions amont et aval sont des notions relatives qui sont globalement à être considérées dans le sens de progression du giravion vers le point de posé.

Les dispositions de la présente invention sont telles que la trajectoire d'approche est calculée en considérant une progression du giravion le long du segment amont suivant une trajectoire d'approche invariante dans la masse d'air environnant le giravion. Un déplacement de ladite masse d'air par rapport au sol sous l'effet du vent influant sur la progression du giravion est pris en compte par l'exploitation du modèle de vent dans l'identification de la trajectoire type, voire encore dans le calcul de la trajectoire d'approche fondé sur la trajectoire type tel que décrit plus loin.

Lors du guidage du giravion le long du segment amont, les éventuelles corrections de position du giravion sous l'effet du vent influant sur sa progression, sont effectuées selon des modalités de variation d'attitude du giravion à moindre bruit préalablement identifiées par la trajectoire type.

On relèvera que les dispositions de la présente invention autorisent en outre une correction avantageuse de la trajectoire d'approche au fur et à mesure de la progression du giravion vers le point de posé, selon une mise à jour du calcul du modèle de vent à partir de mesures itératives des caractéristiques du vent par l'instrumentation de bord du giravion. De telles corrections itératives sont de préférence opérées pour définir la trajectoire d'approche sur la base d'un modèle de vent préalablement calculé selon une estimation la plus pertinente possible des effets réels du vent influant sur la progression du giravion. Des telles dispositions permettent de réduire l'extension du segment transitoire souhaitée la plus réduite possible car s'écartant de la trajectoire d'approche calculée en minimisant le bruit produit par le giravion.

Par ailleurs, l'exploitation du modèle de vent peut néanmoins générer un décalage de position du giravion en fin de segment amont par rapport au point de décision, selon l'estimation faite par le modèle de vent des caractéristiques effectives du vent influant sur la progression du giravion vers le point de décision. Pour pallier un tel éventuel défaut de pertinence du résultat du calcul du modèle de vent, le segment transitoire est défini selon les capacités propres du giravion à rejoindre en vol rapide le point de décision, en ménageant le long du segment aval une brève période de vol stabilisé de progression du giravion vers le point de décision.

Grâce à ces dispositions, le guidage du giravion le long du segment amont sur une majeure partie de la trajectoire d'approche est opéré avec des nuisances sonores réduites, quelles que soient les caractéristiques du vent influant sur la progression du giravion vers le point de décision. La manoeuvre rapide de guidage du giravion le long du segment transitoire est génératrice de nuisances sonores. Cependant, de telles nuisances sonores peuvent être tolérées en raison de la position du giravion proche du sol et en conséquence en raison de la surface au sol d'étendue restreinte subissant ces nuisances sonores.

Plus particulièrement, la trajectoire type est notamment définie par une variation de hauteur-sol et par une variation de vitesse-air du giravion de référence. De telles variations de hauteur-sol et de vitesse-air sont considérées par rapport à une masse d'air considérée environnant le giravion de référence, elle-même en mouvement sous l'effet d'un vent de caractéristiques données. Les dites variation de hauteur-sol et variation de vitesse-air sont notamment identifiées selon la variation d'une distance, dite « distance-air » par rapport à un point de référence au sol.

La trajectoire d'approche est calculée sur le fondement de la trajectoire type identifiée par application le long du segment amont de ladite variation de hauteur-sol et d'une variation de vitesse-sol déduite de ladite variation de vitesse-air de la trajectoire type identifiée.

Tel que précédemment mentionné, le calcul de la trajectoire d'approche est de préférence itérativement répété à séquences données sur le fondement d'une trajectoire type identifiée à une position initiale du giravion située en amont du point final d'approche. Le calcul itératif de la trajectoire d'approche est effectué en prenant en compte à chacune des séquences une position courante considérée du giravion et en corrigeant la trajectoire d'approche fondée sur la trajectoire type identifiée selon un modèle de vent courant déterminé à ladite position courante considérée du giravion.

Selon un mode de réalisation, il est considéré un point de départ d'une trajectoire d'approche situé en amont du point final d'approche. Le point de départ est défini par calcul d'une trajectoire d'approche à une position du giravion située en amont du point final d'approche. Dans ce contexte, le calcul de la trajectoire d'approche est effectué selon les modalités suivantes :

    -) préalablement au franchissement par le giravion du point de départ, la trajectoire d'approche est calculée depuis le point d'extrémité amont du segment aval vers le point de départ sur le fondement d'une trajectoire type préalablement identifiée,

    -) postérieurement au franchissement par le giravion du point de départ dont la position est alors considérée figée, la trajectoire d'approche est calculée depuis la position courante du giravion vers le point d'extrémité amont du segment aval sur le fondement de ladite trajectoire type préalablement identifiée.

On relèvera que selon ces dispositions, le calcul du segment transitoire est exclu du calcul de la trajectoire d'approche préalablement au guidage du giravion le long du segment amont, car les caractéristiques du vent auquel est soumis le giravion le long du segment amont sont inconnues et qu'il n'est pas possible de corriger en conséquence la trajectoire d'approche.

On notera aussi que, à chacune des étapes de calcul itératif de la trajectoire d'approche et préalablement au franchissement par le giravion du point de départ de la trajectoire d'approche, la position du point de départ est susceptible de varier selon l'évolution des résultats du calcul du modèle de vent.

Selon un exemple de calcul du modèle de vent, les caractéristiques en vitesse et en direction du modèle de vent sont déterminées par exécution d'une règle de calcul prenant en compte au moins un paramètre de calcul relatif aux caractéristiques d'un relief considéré environnant le point de posé et prenant en compte les caractéristiques du vent mesurées au moins par une instrumentation de bord du giravion pour déterminer le vent auquel est soumis le giravion.

La valeur du paramètre de calcul peut aussi être définie par défaut selon un environnement du point de posé considéré plat.

La valeur du paramètre de calcul peut encore être déduite par défaut selon les caractéristiques du vent respectivement mesurées à bord du giravion et au point de posé, en prenant notamment en compte les différences entre ces caractéristiques considérées respectivement dans l'environnement du giravion et au point de posé.

Les caractéristiques du modèle de vent sont de préférence calculées en prenant en outre en compte les caractéristiques du vent mesurées au point de posé et transmises au giravion depuis le point de posé. Une telle transmission est notamment effectuée par un personnel au sol en communication avec le pilote du giravion, voire encore peut être effectuée automatiquement par une instrumentation au sol de mesure des caractéristiques du vent au point de posé.

Pour affiner le calcul du modèle de vent, il n'est pas à exclure d'intégrer en outre dans le calcul des caractéristiques du modèle de vent une prise en compte des caractéristiques du vent mesurées en altitude dans l'environnement du point de posé et transmises au giravion depuis le point de posé. Les caractéristiques du vent mesurées en altitude peuvent avoir été mesurées et transmises au point de posé par des aéronefs ayant évolué préalablement à l'approche du giravion dans l'espace aérien environnant le point de posé.

La règle de calcul comprend par exemple une première loi de calcul de la vitesse du modèle de vent (V) selon laquelle :

$$WS(h) = WS_0(h_0) * (h/h_0)^\alpha$$

dans laquelle première loi de calcul $WS(h)$ est la vitesse du vent à une hauteur-sol donnée $h$ du giravion (1), $WS_0(h_0)$ est la vitesse du vent au point de posé à une hauteur-sol $h_0$, $\alpha$ est ledit paramètre de calcul.

Selon un mode de réalisation, le modèle de vent peut être déterminé en considérant constante une direction du vent entre le point de posé et une position courante considérée du giravion. Une telle direction constante du vent peut être déduite selon les caractéristiques du vent indifféremment mesurées à bord du giravion ou au point de posé. Dans ce cas il est évidemment compris qu'il est indifférent que la direction constante du vent soit déduite des caractéristiques du vent mesurées à bord du giravion ou soit déduite des caractéristiques du vent mesurées au point de posé.

Selon un autre mode de réalisation, la règle de calcul comprend une deuxième loi de calcul de la direction du vent. Selon la deuxième loi de calcul, la direction du vent est par exemple calculée par interpolation entre au moins deux mesures des caractéristiques du vent effectuées respectivement à bord du giravion et au point de posé, voire encore en altitude.

Selon une forme de réalisation, la pente limite est définie pour un giravion de structure donnée conformément à une limitation d'une vitesse verticale du giravion au regard d'un premier seuil de variation de vitesse verticale prédéfini. La pente limite est définie par calcul à partir de l'opération de calcul de la trajectoire d'approche, en prenant en compte le dit premier seuil, une vitesse-air de consigne du giravion au point d'extrémité amont du segment aval et la composante de face au giravion du vent estimé par le modèle de vent au point d'extrémité amont du segment aval.

La pente limite est notamment déterminée par calcul après franchissement du point de départ par le giravion abordant le segment amont. La vitesse-air de consigne considérée au point d'extrémité amont du segment aval est déterminée par la trajectoire type préalablement identifiée. Il est plus particulièrement, souhaitable de déterminer la pente limite au plus tôt, et notamment de déterminer la pente limite dès le franchissement du point de départ par le giravion sur le fondement de la vitesse-air de consigne identifiée au point d'extrémité amont du segment aval par la trajectoire type exploitée pour le calcul du segment amont.

Selon un exemple de définition de la pente limite, la pente limite est plus particulièrement définie selon les modalités de calcul suivantes :

$$Lh = arctg \frac{Vzs_1}{\sqrt{Vair^2 - Vzs_1^2} - Vt}$$

dans lesquelles modalités de calcul Lh est la pente limite, $Vzs_1$ est le premier seuil de vitesse, $Vair$ est la vitesse air de consigne et $Vt$ est ladite composante de face au giravion du vent considérées au point d'extrémité amont du segment aval.

Il est évidemment compris que selon lesdites modalités de calcul de la pente limite citées pour exemple, la pente limite est définie par rapport au sol, et plus particulièrement en prenant en considération une orientation horizontale du sol typiquement définie orthogonale au sens de la gravité.

Le segment aval est notamment prédéfini pour un giravion de structure donnée sur une période donnée souhaitée la plus brève possible, pour une pente constante donnée. Le dit vol stabilisé est considéré comme étant une progression du giravion à accélération ressentie nulle avec une vitesse air constante et une vitesse verticale du giravion limitée au regard d'un deuxième seuil de variation de vitesse verticale prédéfini.

A titre indicatif et selon la structure et l'équipement du giravion, la valeur de l'un quelconque au moins du premier seuil et du deuxième seuil est comprise entre 500 ft/mn et 1500 ft/mn (ft/mn : pieds par minute).

L'opération de guidage du giravion met plus particulièrement en oeuvre :

-) une opération de confrontation entre des informations courantes fournies par l'instrumentation de bord et relatives à une variation de la vitesse-sol et à une variation de la hauteur-sol courantes du giravion, et des informations calculées relatives à une variation de la vitesse-sol et à une variation de la hauteur-sol définissant la trajectoire d'approche, et

-) une opération de modification de la position courante du giravion par guidage du giravion conformément à l'application d'une variation de la vitesse-sol et d'une variation de la hauteur-sol définissant la trajectoire d'approche.

Selon un mode de réalisation, le guidage du giravion est opéré par un pilote humain générant des commandes manuelles de vol. Dans ce cas, ladite opération de confrontation est effectuée par voie d'affichage.

Selon un mode de réalisation, le guidage du giravion est opéré par un pilote automatique. Dans ce cas, ladite opération de confrontation est effectuée par calcul dont le résultat est exploité par le pilote automatique pour générer des commandes automatisées de vol.

La présente invention a aussi pour objet un système de calcul d'une trajectoire d'approche apte à mettre en oeuvre un procédé de guidage d'un giravion tel qu'il vient d'être décrit. Un tel système de calcul comprend au moins :

-) une première interface de communication entre d'une part des moyens de calcul et d'autre part une dite base de données aéronautique et une dite base annexe de données.

-) une deuxième interface de communication entre les moyens de calcul et des moyens d'affichage.

-) une troisième interface de communication entre les moyens de calcul et une instrumentation de bord d'un giravion. L'instrumentation de bord comprend notamment au moins un appareil de détection de la vitesse de progression du giravion, anémomètre notamment, associé à des moyens de détermination des caractéristiques du vent environnant le giravion, un système de navigation satellitaire et des moyens d'évaluation de la masse courante du giravion. La masse courante du giravion comprend notamment la masse structurale propre du giravion, la masse de carburant embarqué et la masse d'éventuels emports.

-) une quatrième interface de communication entre les moyens de calcul et des moyens de transmission d'informations à distance. De tels moyens de transmission à distance équipent couramment les giravions pour permettre au pilote de communiquer avec un personnel au sol.

Les dits moyens de calcul comprennent au moins :

a) un premier calculateur de détermination du modèle de vent selon les informations transmises au moins par la troisième interface de communication sinon aussi par la quatrième interface de communication,

b) des moyens de sélection par un pilote d'une route d'approche parmi les routes d'approche répertoriées dans la base de données aéronautique. De tels moyens de sélection sont notamment exploités par le pilote pour un point de posé donné conformément à des instructions d'un personnel au sol transmises par les dits moyens de transmission d'informations à distance.

c) un deuxième calculateur de sélection d'une trajectoire type parmi les trajectoires types répertoriées dans la base annexe de données. La trajectoire type est automatiquement sélectionnée par le deuxième calculateur selon les informations transmises par la première interface de communication et par la troisième interface de communication, et selon le modèle de vent préalablement déterminé par le premier calculateur.

d) un troisième calculateur de définition de la trajectoire d'approche selon une trajectoire type préalablement sélectionnée et selon les informations transmises par la troisième interface de communication, notamment pour une prise en compte dans le calcul de la trajectoire d'approche des caractéristiques du vent environnant le giravion à une position courante considérée.

La présente invention a aussi pour objet un giravion équipé d'un système de calcul tel qu'il vient d'être décrit.

Des exemples de réalisation de la présente invention vont être décrits en relation avec les figures des planches annexées, dans lesquelles :

-   la fig.1 est un schéma illustrant une méthode de calcul d'une trajectoire d'approche vers un point de posé selon une forme de réalisation d'un procédé de guidage d'un giravion conforme à une procédure d'atterrissage de la présente invention.

-   la fig.2 est un schéma illustrant un exemple d'un modèle de vent exploité pour calculer une trajectoire d'approche conformément à la mise en oeuvre d'un procédé de la présente invention.

-   la fig.3 est composée de deux schémas a et b définissant conjointement un exemple d'une trajectoire type exploitée pour le calcul d'une trajectoire d'approche conformément à la mise en oeuvre d'un procédé de la présente invention.

-   la fig.4 est composée de deux schémas c et d définissant conjointement un exemple d'une première trajectoire d'approche calculée à une première position courante du giravion progressant vers un point de posé, conformément à la mise en oeuvre d'un procédé de la présente invention.

-   la fig.5 est composée de deux schémas e et f définissant conjointement un premier exemple d'évolution de la première trajectoire d'approche représentée sur la fig.4, selon un calcul de la trajectoire d'approche à une deuxième position courante du giravion progressant vers le point de posé conformément à la mise en oeuvre d'un procédé de la présente invention.

-   la fig.6 est composée de deux schémas g et h définissant conjointement un deuxième exemple d'évolution de la première trajectoire d'approche représentée sur la fig.4, selon un calcul de la trajectoire d'approche à une troisième position courante du giravion progressant vers le point de posé conformément à la mise en oeuvre d'un procédé de la présente invention.

-   la fig.7 est une illustration d'un exemple de calcul d'un segment transitoire que comprend une trajectoire d'approche calculée conformément à la mise en oeuvre d'un procédé de la présente invention.

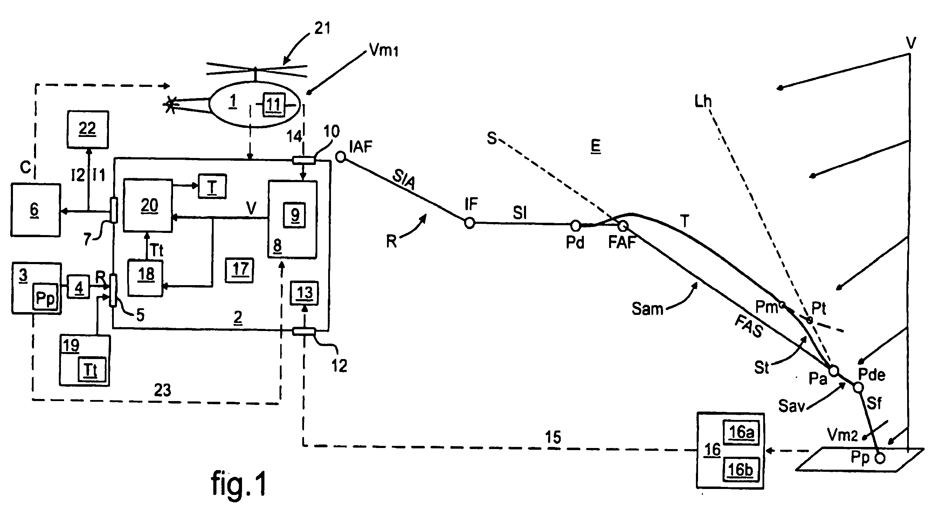

Sur la fig.1, un giravion 1 est en approche d'un point de posé Pp, héliport ou hélisurface notamment. Le giravion 1 dispose de moyens de calcul 2 pour calculer une trajectoire d'approche T que doit suivre le giravion 1, conformément à une route d'approche R prédéfinie. La route d'approche R est issue d'une base de données aéronautique 3 répertoriant une pluralité de points de posé Pp. Au moins une route d'approche R spécifique est associée à chacun des points de posé Pp répertoriés, ladite route d'approche R définissant divers points de passage du giravion 1.

Pour extraire de la base de données aéronautique 3 la route d'approche R à prendre en considération, le pilote dispose de moyens de sélection 4 de la route d'approche R propre au point de posé Pp vers lequel le giravion 1 est en approche. Les moyens de calcul 2 sont en relation avec la base de données aéronautique 3 par l'intermédiaire d'une première interface de communication 5 permettant aux moyens de calcul 2 d'exploiter les données répertoriées par la base de données aéronautique 3. La route d'approche R est traditionnellement segmentée en une pluralité de segments de route successifs suivant le sens de progression du giravion 1 vers le point de posé Pp.

Plus particulièrement, la route d'approche R comprend couramment :

-) un segment initial d'approche SIA, défini entre un point initial d'approche IAF et un point intermédiaire IF. Le segment initial d'approche SIA est abordé par le giravion 1 évoluant en altitude et se dirigeant vers le point de posé PP.

-) un segment intermédiaire SI, défini entre le point intermédiaire IF et un point final d'approche FAF. Le segment intermédiaire SI permet au pilote d'ajuster la vitesse de progression et la position du giravion 1 pour aborder en vol stabilisé un segment final d'approche FAS suivant. Traditionnellement, le segment intermédiaire IS correspond à une approche en palier du giravion vers le segment final d'approche FAS.

-) le dit segment final d'approche FAS, défini entre le point final d'approche FAF et le point de posé PP. Le segment final d'approche FAS définit une pente sol S imposée que le giravion 1 ne doit pas franchir en direction du sol.

Le segment final d'approche FAS s'étend plus particulièrement depuis le point final d'approche FAF jusqu'à un point de décision Pde défini selon une altitude minimale de descente MDA (d'après l'acronyme anglais Minimum Descent Altitude). L'altitude MDA est déterminée par rapport au point de posé Pp et définit communément un segment terminal Sf de la trajectoire d'approche T. L'altitude MDA ou la hauteur MDH sont des limites de hauteur-sol que le pilote du giravion 1 prend en compte dans sa décision d'achever ou non l'approche du giravion 1 vers le point de posé Pp. Les altitudes MDA ou hauteur MDH sont couramment réglementées selon la procédure d'approche utilisée par le pilote en vol aux instruments, en fonction notamment de la qualification du pilote, de la structure et de l'équipement du giravion 1.

A partir de la route d'approche R issue de la base de données aéronautique 3, les moyens de calcul 2 élaborent la trajectoire d'approche T du giravion 1 vers le point de décision Pde.

Le guidage du giravion 1 est opéré par un pilote 6 générant des commandes de vol C modifiant le comportement du giravion 1 pour suivre la trajectoire d'approche T préalablement calculée. Un tel pilote 6 est potentiellement un pilote automatique ou un pilote humain.

Les commandes de vol C sont générées par le pilote 6 en confrontant des informations courantes I1 relatives à la variation d'une vitesse-sol et à la variation d'une hauteur-sol courantes du giravion 1, avec des informations calculées I2 relatives à la variation d'une vitesse-sol et à la variation d'une hauteur-sol définissant la trajectoire d'approche T préalablement calculée. De telles informations I1 et I2 sont de préférence communiquées à un pilote humain par des moyens d'affichage 22 équipant le giravion 1 et placés en relation avec les moyens de calcul 2 par l'intermédiaire d'une deuxième interface de communication 7.

Il est souhaité de limiter au mieux les nuisances sonores générées par le giravion 1 en phase d'approche du point de posé Pp. A cet effet, la trajectoire d'approche T est calculée en prenant en compte des modes de progression du giravion 1 préalablement identifiés comme générateurs de moindre bruit. De tels modes de progression sont identifiés en prenant en compte les effets du vent auquel le giravion 1 est potentiellement soumis.

Plus particulièrement, le bruit émis par un giravion est dépendant de son déplacement dans la masse d'air l'environnant et les nuisances sonores générées par le giravion dépendent des conditions de propagation du bruit qu'il génère.

La trajectoire d'approche T est calculée de sorte que le giravion 1 soit guidé sur une majeure partie de la trajectoire d'approche T de manière invariante par rapport à la masse d'air environnant le giravion 1, tout en permettant au giravion 1 de rejoindre le point de décision Pde par une manoeuvre de correction de position du giravion 1 calculée la plus brève possible.

Dans ce contexte, les moyens de calcul 2 comprennent un premier calculateur 8 de détermination des caractéristiques d'un modèle de vent V. Le premier calculateur 8 intègre une règle de calcul 9 du modèle de vent V selon diverses informations, telles que des informations relatives au relief environnant le point de posé Pp et des informations relatives aux caractéristiques $Vm_2$ et $Vm_1$ du vent considérées respectivement au point de posé Pp et dans l'environnement proche du giravion 1.

Les informations exploitées par le premier calculateur 8 pour déterminer le modèle de vent V sont collectées par les moyens de calcul 2 par l'intermédiaire de diverses interfaces de communication.

Plus particulièrement, la première interface de communication 5 est potentiellement exploitée pour collecter depuis la base de données aéronautique 3 les informations relatives à un paramètre de calcul 23 exploité pour déterminer le modèle de vent. Ce paramètre de calcul 23 est propre aux caractéristiques du relief environnant le point de posé Pp.

Les moyens de calcul 2 sont par ailleurs en relation par l'intermédiaire d'une troisième interface de communication 10 avec une instrumentation de bord 11 du giravion et sont en relation par l'intermédiaire d'une quatrième interface de communication 12 avec des moyens de transmission 13 d'informations à distance équipant le giravion 1.

L'instrumentation de bord 11 fournies des informations 14 relatives aux caractéristiques du vent environnant le giravion 1, les dites informations 14 étant transmises au premier calculateur 8.

Les moyens de transmission 13 d'informations sont mis à profit pour collecter des informations 15 relatives aux caractéristiques $Vm_2$ du vent mesurées au point de posé Pp et communiquées depuis le sol par l'intermédiaire d'un système de communication 16 exploité par un personnel au sol 16a ou par une instrumentation de mesure 16b des caractéristiques $Vm_2$ du vent au point de posé Pp.

Des moyens de saisie 17 permettent au pilote 6 de saisir les informations 15 communiquées par le système de communication 16 en vue de leur exploitation par les moyens de calcul 2.

Par ailleurs, les moyens de calcul 2 comprennent un deuxième calculateur 18 de sélection d'une trajectoire type Tt extraite d'une base annexe de données 19 répertoriant une pluralité de trajectoires types Tt. Les trajectoires types Tt répertoriées sont individuellement identifiées, pour un giravion 1 de structure donnée, selon une masse donnée du giravion 1, selon une pente donnée et selon des modes de progression du giravion 1 préalablement identifié comme générateur de moindre bruit, en prenant en compte les effets produits sur la progression du giravion 1 par un vent donné auquel le giravion 1 est soumis.

Le deuxième calculateur 18 sélectionne une trajectoire type Tt à exploiter identifiée comme procurant une progression du giravion 1 à moindre bruit selon la pente sol S imposée conforme à la route d'approche R, selon la masse courante du giravion 1 et selon les caractéristiques du modèle de vent V préalablement calculées.

La trajectoire type Tt sélectionnée par le deuxième calculateur 18 est exploitée par un troisième calculateur 20 pour calculer la trajectoire d'approche T. Il est à considérer que les différents calculateurs 8, 18 et 20 sont potentiellement intégrés dans un même outil de calcul.

L'intégration d'un modèle de vent V dans le calcul de la trajectoire d'approche T permet de définir des modalités de guidage à moindre bruit du giravion 1, malgré d'éventuels écarts de position du giravion 1 devant être corrigés en raison de l'effet du vent sur la progression du giravion 1 le long de la trajectoire d'approche T.

Cependant, la prise en compte des effets du vent au moyen de la règle de calcul 9 sur les modalités de progression du giravion 1 le long de la route d'approche R, génère potentiellement un écart de position entre la position du giravion 1 et le point de décision Pde en fin d'un segment amont Sam de la trajectoire d'approche T calculé en exploitant le modèle de vent V. En effet, il est probable que le giravion 1 soit soumis à des rafales de vent et/ou soit soumis à un vent dont les caractéristiques effectives sont différentes du résultat issu de l'exécution de la règle de calcul 9.

Un tel défaut potentiel de pertinence de la trajectoire d'approche T rend aléatoire la position du giravion 1 par rapport au point de décision Pde en fin de trajectoire d'approche T. Pour prendre en compte un tel défaut, il est proposé de subdiviser la trajectoire d'approche T en une pluralité de segments successifs.

De tels segments successifs comprennent, considérés suivant le sens de progression du giravion 1 vers le point de posé Pp, un segment amont Sam, un segment transitoire St et un segment aval Sav. Les notions amont et aval sont à être considérées dans le sens de progression du giravion 1 vers le point de posé Pp.

Le segment amont Sam est calculé en appliquant la trajectoire type Tt préalablement extraite de la base annexe de données 19.

Le giravion 1 est guidé le long du segment amont Sam en exploitant les informations calculées I2 issues du calcul de la trajectoire d'approche T, et en exploitant les informations courantes I1 issues de la variation de la hauteur-sol et de la variation de la vitesse-sol du giravion 1. Des moyens d'affichage 22 permettent au pilote de visualiser les informations calculées I2 définissant la trajectoire d'approche T, et les informations courantes I1 fournies par l'instrumentation de bord 11 du giravion identifiant la position courante du giravion 1.

En cas de présence de vent dans l'environnement du giravion 1, il est souhaité de prendre en compte dans le calcul de la trajectoire d'approche T les caractéristiques $Vm_1$ du vent environnant le giravion 1 et mesurées par l'instrumentation de bord 11. Les caractéristiques $Vm_1$ du vent environnant le giravion 1 sont prises en compte lors du calcul du modèle de vent V.

La trajectoire d'approche T est itérativement calculée en prenant en compte les caractéristiques $Vm_1$ courantes du vent environnant le giravion 1 au fur et à mesure de sa progression le long d'une trajectoire d'approche T précédemment calculée, de sorte que le déplacement du giravion 1 le long du segment amont Sam soit invariant par rapport à la masse d'air environnant le giravion, le calcul de la trajectoire d'approche T étant fondé sur la trajectoire type Tt.

Le guidage à moindre bruit du giravion 1 est obtenu nonobstant d'éventuelles manoeuvres rectifiant la position du giravion 1 le long de la trajectoire d'approche T sous l'effet produit par le vent sur la progression du giravion 1 le long de la trajectoire d'approche. Les caractéristiques du vent prises en compte dans le calcul de la trajectoire d'approche T le long du segment amont Sam sont celles estimées du modèle de vent V préalablement déterminé, le guidage du giravion 1 étant opéré selon des manoeuvres identifiées comme génératrices de moindre bruit par la trajectoire type Tt préalablement sélectionnée.

Le segment transitoire St est interposé entre le segment amont Sam et le segment aval Sav. L'extension du segment transitoire St est calculée en excluant l'application de la trajectoire type Tt. Plus particulièrement le long du segment transitoire St, l'application de la trajectoire type Tt est interrompue pour prendre en compte dans le calcul de l'extension du segment transitoire St un guidage rapide du giravion 1 depuis sa position courante en fin du segment amont Sam vers le segment aval Sav.

La propagation du bruit produit par le giravion 1 le long du segment transitoire St est tolérée en raison de la position du giravion 1 proche du sol, et en conséquence en raison des nuisances sonores qu'il génère sur une surface au sol d'étendue restreinte à une telle position du giravion 1 proche du sol.

Le segment transitoire St est calculé par identification d'un point transitoire Pt dont la position est définie selon les capacités du giravion 1 à rejoindre rapidement depuis le segment amont Sam et sous conditions de vol favorables, un point d'extrémité amont Pa du segment aval Sav. Les capacités du giravion 1 à évoluer en vol rapide sous conditions de vol favorables entre deux points de trajectoire sont identifiées en prenant notamment en compte la structure propre du giravion 1 et les capacités de sa motorisation, sa masse courante et sa résistance structurale aux efforts, notamment vis-à-vis des charges supportées par un rotor principal 21 procurant la sustentation du giravion 1.

Plus particulièrement, le point transitoire Pt est un point de calcul du segment transitoire St s'étendant entre un point d'extrémité aval Pm du segment amont Sam et le point d'extrémité amont Pa du segment aval Sav.

Sur l'exemple de la trajectoire d'approche T illustré, le point transitoire Pt est identifié par intersection entre une trajectoire d'approche T précédemment calculée et une pente limite Lh délimitant avec la pente sol S un espace de vol E autorisé du giravion 1. Il est cependant possible que le point transitoire Pt soit identifié par intersection entre une trajectoire d'approche T précédemment calculée et la pente sol S, selon l'évolution des caractéristiques $Vm_1$ du vent auquel est soumis le giravion 1 au fur et à mesure de sa progression de long de la trajectoire d'approche T.

La pente limite Lh passe par le point d'extrémité amont Pa du segment aval Sav en étant définie conformément à une limitation d'une vitesse verticale du giravion 1 au regard d'un premier seuil de variation de vitesse verticale prédéfini, d'une valeur comprise à titre indicatif entre 500 ft/mn et 1500 ft/mn selon la structure du giravion 1. Il est par ailleurs pris en compte une vitesse-air de consigne du giravion 1 et la composante de face au giravion 1 du vent estimé par le modèle de vent V, considérées au point d'extrémité amont Pa du segment aval Sav.

Le segment aval Sav est prédéfini en prenant en compte les capacités du giravion 1 à rejoindre le point de décision Pde en vol stabilisé. Le segment aval Sav est prédéfini le plus bref possible selon les capacités du giravion à rejoindre en vol stabilisé le point de décision

Pde depuis le point amont Pa du segment aval Sav. De telles conditions de vol stabilisé sont notamment identifiées sur une période donnée prédéfinie la plus brève possible, en prenant en compte une pente constante donnée et une variation de vitesse verticale du giravion 1 limitée au regard d'un deuxième seuil de variation de vitesse verticale prédéfini, d'une valeur comprise à titre indicatif entre 500 ft/mn et 1500 ft/mn selon la structure du giravion 1. Le vol stabilisé du giravion est considéré comme étant une progression du giravion 1 à accélération ressentie nulle avec une vitesse-air constante.

Ces dispositions sont telles que la progression à moindre bruit du giravion 1 est optimisée sur la majeure partie de la trajectoire d'approche T le long du segment amont Sam, à une hauteur-sol du giravion 1 où les nuisances sonores générées par la propagation du bruit produit par le giravion 1 sont importantes. Le giravion 1 évolue ensuite le long du segment transitoire St et du segment aval Sav en tolérant le bruit qu'il produit, sur un trajet bref de la trajectoire d'approche T et en position du giravion 1 proche du sol où la surface au sol impactée par les nuisances sonores générées par la propagation du bruit produit par le giravion 1 est d'étendue restreinte.

La trajectoire d'approche T est itérativement calculée au fur et à mesure de la progression du giravion 1 sur le fondement d'une trajectoire type préalablement sélectionnée telle que décrite plus loin. A chacun des calculs de la trajectoire d'approche T répétés au fur et à mesure de la progression du giravion 1 le long d'une trajectoire d'approche T préalablement calculée, la trajectoire d'approche T est corrigée selon les caractéristiques du modèle de vent V déterminées à la position courante du giravion 1.

Plus particulièrement, pour optimiser la pertinence du calcul du segment amont Sam et pour réduire le trajet du giravion 1 défini par le segment transitoire St, la trajectoire d'approche T est itérativement calculée selon les caractéristiques du modèle de vent V déterminé aux différentes positions courantes successives du giravion 1 progressant le long d'une trajectoire d'approche T précédemment calculée.

La trajectoire type Tt est sélectionnée préalablement au franchissement par le giravion 1 d'un point de départ Pd de la trajectoire d'approche T situé en amont du point final d'approche FAF, voire confondu avec le point final d'approche FAF.

Il est évidemment compris par notion de départ un point d'extrémité amont de la trajectoire d'approche T calculée, et plus particulièrement un point d'extrémité amont du segment amont Sam. La trajectoire type Tt est sélectionnée à une position courante du giravion 1 située sur la route d'approche R en amont du point final d'approche FAF.

Préalablement au franchissement du point de départ Pd, la trajectoire d'approche T est calculée à rebours du sens de progression du giravion 1 vers le point de posé, depuis le point d'extrémité amont Pa du segment aval Sav vers la position courante du giravion 1.

Dans ce contexte, le calcul du segment transitoire St est temporairement exclu du calcul de la trajectoire d'approche T, tant que le giravion 1 n'a pas franchi le point de départ Pd.

Lorsque le giravion 1 franchit le point de départ Pd, la pente limite Lh est déterminée par identification de ladite vitesse-air de consigne conformément à l'application de la trajectoire type Tt et de ladite composante de face du vent sur le fondement du modèle de vent calculé. La pente limite Lh identifiée est par la suite exploitée pour calculer le segment transitoire St lors des opérations de calcul itératif de la trajectoire d'approche T.

La trajectoire d'approche T est calculée depuis la position courante du giravion 1 vers le point d'extrémité amont Pa du segment aval Sav. La trajectoire d'approche T est alors calculée en incluant le calcul du segment transitoire St. La trajectoire d'approche T est itérativement calculée par application de la trajectoire type Tt et par corrections de la trajectoire d'approche T déduite de l'application de la trajectoire type Tt selon les modèles de vent V respectivement déterminés à différentes positions courantes successives du giravion 1 progressant le long d'une trajectoire d'approche T préalablement calculée.

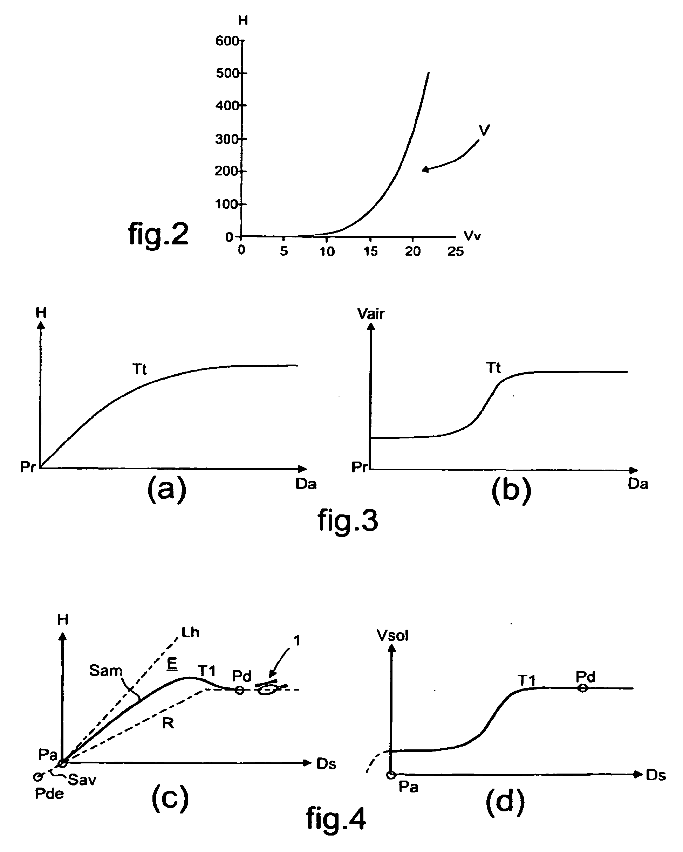

Sur la fig.2, les caractéristiques du modèle de vent V sont déterminées par application d'une règle de calcul conforme à la formulation suivante : $WS(h) = WS_0(h_0) * (h/h_0)^\alpha$. Dans cette règle de calcul, $WS(h)$ est la vitesse du vent à une hauteur-sol donnée h du giravion, $WS_0(h_0)$ est la vitesse du vent proche du sol mesuré au point de posé à une hauteur-sol $h_0$, $\alpha$ est un paramètre de calcul relatif aux caractéristiques du relief environnant le point de posé.

La notion de proximité du sol est à apprécier selon la position de l'instrument de mesure exploité pour mesurer les caractéristiques du vent au point de posé.

Sur l'exemple représenté sur la fig.2, il est considéré une direction constante du modèle de vent V. Le résultat de l'application de la règle de calcul est illustré dans un repère hauteur-sol H variant selon une vitesse du vent Vv mesurée à 10 m du sol de l'ordre de 10 m/s (mètres par seconde) et pour un dit paramètre de calcul de 0,2 correspondant à un relief au sol sensiblement plat.

Il est cependant à considérer que le modèle de vent V peut être calculé sur la base des caractéristiques du vent uniquement mesurées indifféremment à bord du giravion ou au point de posé. L'exploitation seule des caractéristiques du vent mesurées à bord du giravion par l'instrumentation de bord est notamment effectuée en cas d'indisponibilité des caractéristiques du vent mesurées au point de posé.

Il est aussi à considérer qu'une valeur par défaut du paramètre de calcul peut être exploitée sur la base d'un relief au sol sensiblement plat tel que précédemment mentionné, ou sur la base d'une valeur calculée du paramètre de calcul à partir de la connaissance des caractéristiques du vent mesurées respectivement au point de posé et à bord du giravion.

La fig.3 est composée de deux schémas a et b illustrant une trajectoire type Tt identifiée par rapport à un point de référence au sol Pr dans un repère orthonormé. Une variation de hauteur-sol illustrée sur le schéma a et une variation de vitesse-air illustrée sur le schéma b sont définies en fonction d'une variation d'une « distance-air » Da par rapport au point de référence au sol Pr. La « distance air » correspond à une distance à parcourir par le giravion dans une masse d'air en mouvement à une vitesse et à une direction correspondant aux caractéristiques d'un vent donné. La trajectoire type est sélectionnée parmi les trajectoires types répertoriées dans la base annexe de données par application de caractéristiques d'un vent données identifiées par le calcul du modèle de vent.

Une trajectoire d'approche du giravion vers un point de posé préalablement identifié peut être calculée par transposition de ladite « distance-air » en distance-sol est fonction de la vitesse-air du giravion et du vent dont les caractéristiques sont issues du modèle de vent calculé. Plus particulièrement, ladite transposition est réalisée par calcul de la vitesse-sol le long de la route d'approche préalablement identifiée, à partir de la vitesse-air du giravion mesurée par l'instrumentation de bord et à partir des caractéristiques du vent auxquelles est potentiellement soumis le giravion et qui sont identifiées par le modèle de vent. La distance-sol à parcourir par le giravion est déduite de ladite vitesse-sol par intégration temporelle.

Tel que précédemment mentionné sur l'exemple illustré sur la fig. 1, une telle trajectoire type Tt est extraite d'une base annexe de données équipant un giravion, afin de calculer une trajectoire d'approche T de ce giravion vers un point de posé conformément à une route d'approche R préalablement identifiée.

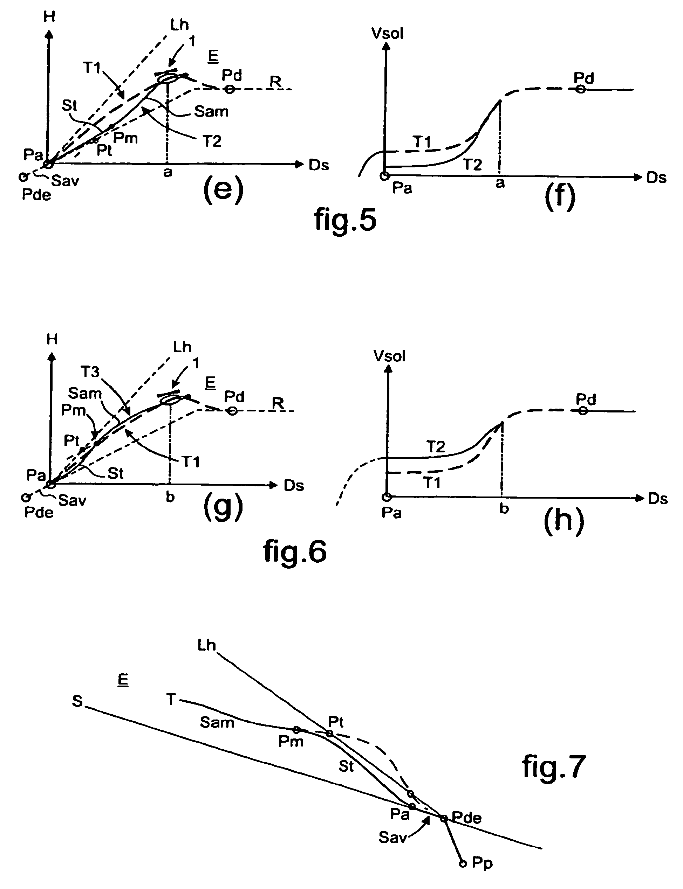

Sur les fig.4 à fig. 6, la trajectoire d'approche respectivement T1 pour la fig.4, T2 pour la fig.5 et T3 pour la fig.6, est calculée en exploitant une trajectoire type extraite d'une dite base annexe de données tel que précédemment mentionné. Une telle trajectoire type, telle que par exemple la trajectoire type Tt illustrée sur la fig.3, prend en compte un modèle de vent préalablement calculé conformément à la mise en oeuvre du procédé de la présente invention, tel que par exemple le modèle de vent V illustré sur la fig.2.

Les trajectoires d'approche T1, T2 et T3 sont calculées par application de la trajectoire type le long d'un segment amont Sam des trajectoires d'approche T1, T2 et T3. Plus particulièrement, le segment amont Sam est calculé par application le long du segment amont Sam de ladite variation de hauteur-sol H et d'une variation de vitesse-sol Vsol déduite de ladite variation de vitesse-air Vair de la trajectoire type.

Le giravion évolue le long d'une trajectoire d'approche T1, T2 ou T3 préalablement calculée à l'intérieur d'un espace de vol E autorisé du giravion 1. L'espace de vol E est délimité dans un plan vertical défini par la gravité entre une pente limite Lh préalablement identifiée par calcul et une pente sol S imposée par une route d'approche R préalablement sélectionnée. Il est à remarquer que contrairement aux habitudes dans le domaine de la définition d'une trajectoire d'approche d'un giravion vers un point de posé, les trajectoires d'approche calculées T1, T2 et T3 divergent potentiellement de la pente sol S tout en étant contenues dans l'espace de vol E. Une telle divergence est induite par la prise en compte dans le calcul des trajectoires d'approche T1, T2 et T3 du modèle de vent et d'une trajectoire type Tt prédéfinie pouvant s'écarter de la pente sol imposée de la route d'approche R.

Sur la fig. 4, le giravion 1 progresse en amont d'un point de départ Pd d'une première trajectoire d'approche T1. Tant que le giravion 1 n'a pas franchi le point de départ Pd, la première trajectoire d'approche T1 et plus spécifiquement le segment amont Sam sont calculés depuis le point d'extrémité amont Pa du segment aval Sav vers le point de départ Pd..

Après franchissement du point de départ Pd par le giravion 1 tel qu'illustré sur les fig.5 et fig.6, les trajectoires d'approche T2, T3 et plus spécifiquement le segment amont Sam et le segment transitoire St de ces trajectoires d'approche T2, T3, sont calculés depuis la position courante du giravion 1 vers le point d'extrémité amont Pa du segment aval Sav. Les trajectoires d'approche T2, T3 sont itérativement calculées en corrigeant leurs caractéristiques selon le modèle de vent calculé à la position courante du giravion 1 repérée par rapport au sol au point a sur les schémas de la fig.5 et au point b sur les schémas de la fig.6.

Sur l'exemple de réalisation illustré sur la fig.5, la vitesse du vent auquel est soumis de face le giravion 1 augmente. Une deuxième trajectoire T2 est calculée pour définir le segment amont Sam et le segment transitoire St. La position d'un point transitoire Pt à partir duquel est calculé le segment transitoire St est identifiée par intersection entre la deuxième trajectoire d'approche T2 et la pente sol S imposée par la route d'approche R.

Sur l'exemple de réalisation illustré sur la fig.6, la vitesse du vent auquel est soumis de face le giravion diminue. Une troisième trajectoire d'approche T3 est calculée pour définir le segment amont Sam et le segment transitoire St. La position d'un point transitoire Pt à partir duquel est calculé le segment transitoire St est identifiée par intersection entre la troisième trajectoire d'approche T3 et la pente limite Lh.

Sur la fig.7, une trajectoire d'approche T est calculée selon les modalités décrites sur la fig.1. Un espace de vol E autorisé du giravion est défini entre une pente sol S imposée par la route d'approche et une pente limite Lh. La pente limite Lh passe par le point d'extrémité amont Pa du segment aval Sav. L'espace de vol E permet d'identifier un point transitoire Pt par intersection entre d'une part la trajectoire d'approche T et d'autre part l'une ou l'autre de la pente sol S ou de la pente limite Lh. L'identification du point transitoire Pt permet de calculer le segment transitoire St entre un point aval Pm du segment amont Sam et le point d'extrémité amont Pa du segment aval Sav.

Plus particulièrement, la trajectoire d'approche T est calculée selon le procédé de la présente invention. Le point transitoire Pt est identifié par intersection entre la trajectoire d'approche T et la pente limite Lh. La trajectoire d'approche T coupe potentiellement la pente limite Lh ou la pense sol S en plusieurs points d'intersection. Dans ce cas, il est pris en considération pour définir le point transitoire Pt le point d'intersection amont entre d'une part la trajectoire d'approche T et d'autre part indifféremment la limite de vol Lh ou la pente sol S.

Dans le cas d'exemple illustré sur la fig.7, la trajectoire d'approche T coupe la limite de vol Lh en deux points d'intersection. Le point transitoire Pt est défini par le point d'intersection amont entre la trajectoire d'approche T et la limite de vol Lh.

**Revendications**

1. Procédé de guidage d'un giravion (1) par rapport à un point de posé (Pp) conformément à une procédure d'atterrissage, ledit procédé comprenant les opérations suivantes :

   -) au moins une opération de sélection en vol d'une route d'approche (R) préalablement identifiée pour le point de posé (Pp), la route d'approche (R) étant sélectionnée parmi une pluralité de routes d'approche (R) répertoriées par une base de données aéronautique (3) et propres à des points de posé (Pp) identifiés, la route d'approche (R) sélectionnée définissant une pente sol (S) ne devant pas être franchie vers le sol par le giravion (1) depuis un point final d'approche (FAF) vers un point de décision (Pde),

   -) au moins une opération de calcul en vol d'une trajectoire d'approche (T) conforme à la route d'approche (R) préalablement sélectionnée, ladite opération de calcul de la trajectoire d'approche (T) prenant en compte une combinaison entre divers critères dont au moins la pente sol (S) définie par la route d'approche (R) préalablement sélectionnée, la masse courante du giravion (1), et un critère de moindre bruit relatif à un mode de progression du giravion (1) identifié comme étant générateur de moindre bruit au regard d'un seuil prédéfini du bruit produit par le giravion (1),

   -) au moins une opération de repérage d'une position courante du giravion (1) par une instrumentation de bord (11) du giravion, et

   -) une opération de guidage du giravion (1) le long de la trajectoire d'approche (T) préalablement calculée en corrigeant la position du giravion (1) selon les effets sur sa progression d'une variation des caractéristiques du vent identifiées par l'instrumentation de bord (11) du giravion (1),

**caractérisé, en ce que** le giravion (1) étant doté d'une base annexe de données (19) répertoriant une pluralité de trajectoires types (Tt) définies pour au moins un giravion de référence de structure donnée correspondante à la structure du giravion (1) en approche du point de posé (Pp), les trajectoires types (Tt) étant définies par application du dit critère de moindre bruit selon au moins une pente sol donnée, selon une masse donnée du giravion de référence et selon un critère de vent relatif aux effets produits par un vent de caractéristiques données sur une masse d'air à l'intérieur de laquelle évolue le giravion de référence, le procédé comprend les opérations suivantes effectuées en approche du giravion (1) vers le point de posé (Pp) :

-) déterminer un modèle de vent (V) représentatif de l'évolution des caractéristiques du vent définies en vitesse et en direction, entre une position courante du giravion (1) et le point de posé (Pp),

-) identifier dans la base annexe de données (19) au moins une trajectoire type (Tt) définie pour le giravion (1) vis-à-vis de sa structure, par application du critère de moindre bruit selon au moins ladite pente sol (S) de la route d'approche (R) préalablement sélectionnée, selon la masse courante du giravion (1) et selon le modèle de vent (V) préalablement déterminé, puis

-) calculer au moins une dite trajectoire d'approche (T) à compter d'une position courante du giravion (1) située en amont du point final d'approche (FAF), selon au moins trois segments successifs comprenant suivant le sens de progression du giravion (1) vers le point de posé (Pp) :

a) un segment amont (Sam), dont l'extension est calculée par application de la trajectoire type (Tt) préalablement identifiée entre une position courante du giravion (1) et un segment transitoire (St),

b) un segment transitoire (St), s'étendant entre un point d'extrémité aval (Pm) du segment amont (Sam) et un point d'extrémité amont (Pa) d'un segment aval (Sav) de la trajectoire d'approche (T), dans un espace de vol (E) autorisé du giravion (1) délimité entre la pente sol (S) et une pente limite (Lh) passant par le point d'extrémité amont (Pa) du segment aval (Sav), le segment transitoire (St) étant calculé en excluant de son extension une application de la trajectoire type (Tt) et par identification d'un point transitoire (Pt) déterminé par intersection entre d'une part la trajectoire d'approche (T) et d'autre part l'une quelconque de la pente sol (S) et de la pente limite (Lh),

c) le dit segment aval (Sav), dont l'extension est prédéfinie par rapport au point de décision (Pde) selon les capacités propres du giravion (1) à rejoindre en vol stabilisé le point de décision (Pde) depuis le point d'extrémité amont (Pa) du segment aval (Sav),

2. Procédé selon la revendication 1, **caractérisé en ce que** :

-) la trajectoire type (Tt) est définie par une variation de hauteur-sol (H) et par une variation de vitesse-air (Vair) du giravion de référence par rapport à une masse d'air considérée environnant le giravion de référence et en mouvement sous l'effet d'un vent de caractéristiques données, les dites variation de hauteur-sol (H) et variation de vitesse-air (Vair) étant identifiées selon la variation d'une distance, dite « distance-air » (Da), par rapport à un point de référence (Pr) au sol,

-) la trajectoire d'approche (T) est calculée sur le fondement de la trajectoire type (Tt) identifiée, par application le long du segment amont (Sam) de ladite variation de hauteur-sol (H) et d'une variation de vitesse-sol (Vsol) déduite de ladite variation de vitesse-air (Vair) de la trajectoire type (Tt) identifiée.

3. Procédé selon la revendication 2, **caractérisé en ce que** le calcul de la trajectoire d'approche (T) est itérativement répété à séquences données sur le fondement d'une trajectoire type (Tt) identifiée à une position initiale du giravion (1) située en amont du point final d'approche (FAF), en prenant en compte à chacune des séquences une position courante considérée du giravion (1) et en corrigeant la trajectoire d'approche (T) fondée sur la trajectoire type (Tt) selon un modèle de vent (V) courant déterminé à ladite position courante considérée du giravion (1).

4. Procédé selon l'une quelconque des revendications 1 à 3, **caractérisé en ce que**, considérant un point de départ (Pd) d'une trajectoire d'approche (T) situé en amont du point final d'approche (FAF) et défini par calcul d'une trajectoire d'approche (T1) à une position du giravion (1) située en amont du point final d'approche (FAF), le calcul de la trajectoire d'approche (T) est effectué selon les modalités suivantes :

-) préalablement au franchissement par le giravion (1) du point de départ (Pd), la trajectoire d'approche (T1) est calculée depuis le point d'extrémité amont (Pa) du segment aval (Sav) vers le point de départ (Pd) sur le fondement d'une trajectoire type (Tt) préalablement identifiée,

-) postérieurement au franchissement par le giravion (1) du point de départ (Pd) dont la position est alors considérée figée, la trajectoire d'approche (T2, T3) est calculée depuis la position courante du giravion (1) vers le point d'extrémité amont (Pa) du segment aval (Sav) sur le fondement de ladite trajectoire type (Tt) préalablement identifiée.

5. Procédé selon l'une quelconque des revendications 1 à 4,
   **caractérisé en ce que** les caractéristiques en vitesse et en direction du modèle de vent (V) sont déterminées par exécution d'une règle de calcul (9) prenant en compte au moins un paramètre de calcul (23) relatif aux caractéristiques d'un relief considéré environnant le point de posé (Pp) et prenant en compte les caractéristiques du vent mesurées au moins par une instrumentation de bord (11) du giravion (1).

6. Procédé selon la revendication 5,
   **caractérisé en ce que** la valeur du paramètre de calcul (23) est définie par défaut selon un environnement du point de posé (Pp) considéré plat.

7. Procédé selon la revendication 5,
   **caractérisé en ce que** la valeur du paramètre de calcul (23) est déduite par défaut selon les caractéristiques du vent respectivement mesurées à bord du giravion (1) et au point de posé (Pp).

8. Procédé selon l'une quelconque des revendications 5 à 7,
   **caractérisé en ce que** les caractéristiques du modèle de vent (V) sont calculées en prenant en outre en compte les caractéristiques du vent mesurées au point de posé (Pp) et transmises au giravion (1) depuis le point de posé (Pp).

9. Procédé selon l'une quelconque des revendications 5 à 8,
   **caractérisé en ce que** les caractéristiques du modèle de vent (V) sont calculées en prenant en outre en compte les caractéristiques du vent mesurées en altitude dans l'environnement du point de posé (Pp) et transmises au giravion (1) depuis le point de posé.

10. Procédé selon la revendication 8,
    **caractérisé en ce que** la règle de calcul (9) comprend une première loi de calcul de la vitesse du modèle de vent (V) selon laquelle :

$$WS(h) = WS_0(h_0) \cdot (h/h_0)^{\alpha}$$

dans laquelle première loi de calcul WS(h) est la vitesse du vent à une hauteur-sol donnée h du giravion (1), $WS_0(h_0)$ est la vitesse du vent au point de posé (Pp) à une hauteur-sol $h_0$, $\alpha$ est ledit paramètre de calcul (23).

11. Procédé selon la revendication 10,
    **caractérisé en ce que** le modèle de vent (V) est déterminé en considérant constante une direction du vent entre le point de posé (Pp) et une position courante considérée du giravion (1) selon les caractéristiques du vent indifféremment mesurées à bord du giravion (1) ou au point de posé (Pp).

12. Procédé selon la revendication 10,
    **caractérisé en ce que** la règle de calcul (9) comprend une deuxième loi de calcul de la direction du vent, selon laquelle la direction du vent est calculée par interpolation entre au moins deux mesures des caractéristiques du vent effectuées respectivement à bord du giravion (1) et au point de posé (Pp).

13. Procédé selon l'une quelconque des revendications 1 à 12,
    **caractérisé en ce que** la pente limite (Lh) est définie pour un giravion (1) de structure donnée conformément à une limitation d'une vitesse verticale du giravion (1) au regard d'un premier seuil de variation de vitesse verticale prédéfini, en prenant en compte le dit premier seuil, en prenant en compte une vitesse air de consigne du giravion (1) au point d'extrémité amont (Pa) du segment aval (Sav) déterminée par la trajectoire type (Tt) préalablement identifiée et en prenant en compte la composante de face au giravion (1) du vent dont les caractéristiques sont estimées par le modèle de vent (V) au point d'extrémité amont (Pa) du segment aval (Sav).

14. Procédé selon la revendication 13,
    **caractérisé en ce que** la pente limite (Lh) est plus particulièrement définie selon les modalités de calcul suivantes :

$$Lh = arctg \frac{Vzs_1}{\sqrt{Vair^2 - Vzs_1^2} - Vt}$$

dans lesquelles modalités de calcul *Lh* est la pente limite, *Vzs₁* est le premier seuil de vitesse, *Vair* est la vitesse air du giravion et *Vt* est ladite composante de face au giravion (1) du vent considérées au point d'extrémité amont (Pa) du segment aval (Sav).

**15.** Procédé selon l'une quelconque des revendications 1 à 14,
**caractérisé en ce que** le segment aval (Sav) est prédéfini pour un giravion (1) de structure donnée sur une période donnée pour une pente constante donnée, le dit vol stabilisé étant considéré comme étant une progression du giravion (1) à accélération ressentie nulle avec une vitesse-air constante et une vitesse verticale du giravion (1) limitée au regard d'un deuxième seuil de variation de vitesse verticale prédéfini.

**16.** Procédé selon la revendication 15,
**caractérisé en ce que** la valeur de l'un quelconque au moins du premier seuil et du deuxième seuil est comprise entre 500 ft/mn et 1500 ft/mn.

**17.** Procédé selon l'une quelconque des revendications 1 à 16,
**caractérisé en ce que** l'opération de guidage du giravion (1) met en oeuvre :

-) une opération de confrontation entre des informations courantes fournies par l'instrumentation de bord (11) et relatives à une variation de la vitesse-sol et à une variation de la hauteur-sol courantes du giravion (1), et des informations calculées relatives à une variation de la vitesse-sol et à une variation de la hauteur-sol définissant la trajectoire d'approche (T), et
-) une opération de modification de la position courante du giravion (1) par guidage du giravion (1) conformément à l'application d'une variation de la vitesse-sol et d'une variation de la hauteur-sol définissant la trajectoire d'approche (T).

**18.** Procédé selon la revendication 17,
**caractérisé en ce que** le guidage du giravion (1) étant opéré par un pilote humain générant des commandes manuelles de vol, ladite opération de confrontation est effectuée par voie d'affichage.

**19.** Procédé selon la revendication 17,
**caractérisé en ce que** le guidage du giravion (1) étant opéré par un pilote automatique, ladite opération de confrontation est effectuée par calcul dont le résultat est exploité par le pilote automatique pour générer des commandes automatisées de vol.

**20.** Système de calcul d'une trajectoire d'approche apte à la mise en oeuvre d'un procédé de guidage d'un giravion selon l'une quelconque des revendications 1 à 19.
**caractérisé en ce que** le système de calcul comprend :

-) une première interface de communication (5) entre d'une part des moyens de calcul (2) et d'autre part une dite base de données aéronautique (3) et une dite base annexe de données (19),
-) une deuxième interface de communication (7) entre les moyens de calcul (2) et des moyens d'affichage (22),
-) une troisième interface de communication (10) entre les moyens de calcul (2) et une instrumentation de bord (11) d'un giravion (1) comprenant au moins un appareil de détection de la vitesse de progression du giravion (1) associé à des moyens de détermination des caractéristiques du vent environnant le giravion (1), un système de navigation satellitaire, et des moyens d'évaluation de la masse courante du giravion (1) et,
-) une quatrième interface de communication (12) entre les moyens de calcul (2) et des moyens de transmission (13) d'informations à distance,
-) les dits moyens de calcul (2), comprenant :

a) un premier calculateur (8) de détermination du modèle de vent (V) selon les informations transmises au moins par la troisième interface de communication (10) sinon aussi par la quatrième interface de communication (12),
b) pour un point de posé (Pp) donné et conformément à des instructions d'un personnel au sol transmises par les dits moyens de transmission (13) d'informations à distance, des moyens de sélection (4) par un pilote (6) d'une route d'approche (R) parmi les routes d'approche (R) répertoriées dans la base de données aéronautique (3),
c) un deuxième calculateur (18) de sélection d'une trajectoire type (Tt) parmi les trajectoires types (Tt) répertoriées dans la base annexe de données (19), selon les informations transmises par la première interface de communication (5) et par la troisième interface de communication (10), et selon le modèle de vent (V) préalablement déterminé par le premier calculateur (8),
d) un troisième calculateur (20) de définition de la trajectoire d'approche (T) selon une trajectoire type (Tt) préalablement sélectionnée et selon les informations transmises par la troisième interface de communication (10).

**21.** Giravion équipé d'un système de calcul selon la revendication 20.

**Patentansprüche**

1.  Verfahren zur Steuerung eines Drehflügelflugzeugs (1) bezüglich eines Landepunktes (Pp) gemäß einem Landevorgang, wobei das Verfahren folgende Schritte aufweist:

    -) mindestens einen Schritt der Auswahl eines Annäherungskurses (R) während des Flugs, der zuvor für den Landepunkt (Pp) identifiziert wurde, wobei der Annäherungskurs (R) ausgewählt wird aus einer Mehrzahl von Annäherungskursen (R), die in eine Datenbank (3) für aeronautische Daten aufgenommen sind und die den identifizierten Landepunkten (Pp) eigen sind, wobei der ausgewählte Annäherungskurs (R) eine Neigung gegenüber dem Grund (S) definiert, die zum Grund hin durch das Drehflügelflugzeug (1) ausgehend von einem Annäherungsendpunkt (FAF) bis zu einem Entscheidungspunkt (Pde) nicht unterschritten werden darf,
    -) mindestens einen Schritt der Berechnung einer Annäherungsflugbahn (T) während des Flugs gemäß dem zuvor ausgewählten Annäherungskurs (R), wobei der Schritt der Berechnung der Annäherungsbahn (T) eine Kombination aus diversen Kriterien berücksichtigt, darunter mindestens die Neigung gegenüber dem Grund (S), die durch den zuvor ausgewählten Annäherungskurs (R) definiert ist, das aktuelle Gewicht des Drehflügelflugzeugs (1) und ein Kriterium der geringsten Lärmbelästigung bezüglich eines Vortriebsmodus' des Drehflügelflugzeugs (1), der identifiziert wurde als der am wenigsten Lärm erzeugende Modus bezüglich eines vordefinierten Schwellenwertes des von dem Drehflügelflugzeug (1) erzeugten Lärms,
    -) mindestens einen Schritt des Ortens einer aktuellen Position des Drehflügelflugzeugs (1) durch ein Bordinstrument (11) des Drehflügelflugzeugs, und
    -) einen Schritt der Steuerung des Drehflügelflugzeugs (1) entlang der zuvor berechneten Annäherungsflugbahn (T), bei dem die Position des Drehflügelflugzeugs (1) gemäß den Einflüssen einer Veränderung von Windeigenschaften auf seinen Vortrieb, die durch das Bordinstrument (11) des Drehflügelflugzeugs (1) identifiziert worden sind, korrigiert wird,

    **dadurch gekennzeichnet, dass** das Drehflügelflugzeug (1) mit einer Zweit-Datenbank (19) versehen ist, in der eine Mehrzahl von typischen Flugbahnen (Tt) aufgenommen sind, die für mindestens ein Referenz-Drehflügelflugzeug mit gegebenem Aufbau, der dem Aufbau des Drehflügelflugzeugs (1) bei der Annäherung an den Landepunkts (Pp) entspricht, definiert sind, wobei die typischen Flugbahnen (Tt) definiert sind durch die Anwendung des Kriteriums der geringsten Lärmbelästigung bei mindestens einer vorgegebenen Neigung gegenüber dem Grund bei einem vorgegebenen Gewicht des Referenz-Drehflügelflugzeugs und gemäß einem Kriterium des Windes bezüglich Effekten, die von einem Wind mit vorgegebenen Eigenschaften auf eine Luftmasse erzeugt werden, innerhalb der sich das Referenz-Drehflügelflugzeug bewegt, wobei das Verfahren folgende Schritte aufweist, die bei der Annäherung des Drehflügelflugzeugs (1) an den Landepunkt (Pp) ausgeführt werden:

    -) Bestimmen eines Modells für den Wind (V), das die Entwicklung von Eigenschaften des Winds, definiert durch die Windgeschwindigkeit und die Windrichtung, zwischen einer aktuellen Position des Drehflügelflugzeugs (1) und dem Landepunkt (Pp) wiedergibt,
    -) Identifizieren mindestens einer typischen Flugbahn (Tt) in der Zweit-Datenbank (19), wobei die Flugbahn für das Drehflügelflugzeug (1) an seinem Aufbau orientiert definiert ist durch Anwendung des Kriteriums der kleinsten Lärmbelästigung mindestens während der Neigung gegenüber dem Grund (S) des zuvor gewählten Annährungskurses (R) gemäß dem aktuellen Gewicht des Drehflügelflugzeugs (1) und gemäß dem zuvor bestimmten Modell des Windes (V), und dann
    -) Berechnen mindestens einer Annäherungsflugbahn (T) ausgehend von einer aktuellen Position des Drehflügelflugzeugs (1), die vor dem Annäherungsendpunkt (FAF) gelegen ist, gemäß mindestens drei aufeinanderfolgenden Segmenten, die in Richtung des Vortriebs des Drehflügelflugzeugs (1) zum Landepunkt (Pp) hin sind:

        a) ein vorderes Segment (Sam), dessen Erstreckung berechnet wird durch die Anwendung der zuvor identifizierten typischen Flugbahn (Tt) zwischen einer aktuellen Position des Drehflügelflugzeugs (1) und einem Übergangssegment (St),
        b) ein Übergangssegment (St), das sich zwischen einem hinteren Endpunkt (Pm) des vorderen Segments (Sam) und einem vorderen Endpunkt (Pa) eines hinteren Segments (Sav) der Annäherungsflugbahn (T) in einem autorisierten Flugraum (E) des Drehflügelflugzeugs (1) erstreckt, der eingegrenzt ist zwischen der Neigung gegenüber dem Grund (S) und einer Grenzneigung (Lh), die durch den vorderen Endpunkt (Pa) des hinteren Segments (Sav) verläuft, wobei das Übergangssegment (St) berechnet wurde, indem von seiner Erstreckung eine Anwendung der typischen Flugbahn (Tt) ausgeschlossen wurde und durch Identifizierung eines Übergangspunktes (Pt), der bestimmt ist durch den Schnittpunkt zwischen einerseits der Annäherungsflugbahn (T) und andererseits einer beliebigen Neigung gegenüber dem Grund (S) und der Grenzneigung (Lh),
c) das hintere Segment (Sav), dessen Erstreckung bezüglich des Entscheidungspunktes (Pde) vordefiniert ist gemäß der Eigenfähigkeiten des Drehflügelflugzeugs (1), im stabilisierten Flug den Entscheidungspunkt (Pde) ausgehend von dem vorderen Endpunkt (Pa) des hinteren Segments (Sav) wieder zu erreichen.

2.  Verfahren nach Anspruch 1,
    **dadurch gekennzeichnet, dass**:

    -) die typische Flugbahn (Tt) definiert ist durch eine Veränderung der Höhe über Grund (H) und durch eine Veränderung der Fluggeschwindigkeit (Vair) des Referenz-Drehflügelflugzeugs relativ zu einer Luftmasse, von der angenommen wird, dass sie das Referenz-Drehflügelflugzeug umgibt, und die sich unter Einwirkung des Windes mit vorgegebenen Eigenschaften bewegt, wobei die Änderung der Höhe über Grund (H) und die Änderung der Fluggeschwindigkeit (Vair) identifiziert werden gemäß der Veränderung eines Abstands, genannt "Luftlinienabstand" (Da), von einem Bezugspunkt (Pr) am Boden,
    -) die Annäherungs-Flugbahn (T) berechnet wird auf der Grundlage der identifizierten typischen Flugbahn (Tt) durch Anwendung der Änderung der Höhe über Grund (H) und einer Änderung der Geschwindigkeit über Grund (Vsol), die abgeleitet wird durch die Veränderung der Fluggeschwindigkeit (Vair) der identifizierten typischen Flugbahn (Tt) entlang des vorderen Segments (Sam).

3.  Verfahren nach Anspruch 2,
    **dadurch gekennzeichnet, dass** die Berechnung der Annäherungsflugbahn (T) aufeinanderfolgend in vorgegebenen Intervallen auf der Grundlage einer typischen Flugbahn (Tt) wiederholt wird, die identifiziert wurde in einer ursprünglichen Position des Drehflügelflugzeugs (1), die vor dem Annäherungsendpunkt (FAF) gelegen ist, unter Berücksichtigung in jedem Intervall einer betrachteten aktuellen Position des Drehflügelflugzeugs (1), und indem die Annäherungsflugbahn (T) korrigiert wird auf der Grundlage der typischen Flugbahn (Tt) gemäß einem Modell des aktuellen Windes (V), das in der aktuellen Position des Drehflügelflugzeugs (1) bestimmt wird.

4.  Verfahren nach einem der Ansprüche 1 bis 3,
    **dadurch gekennzeichnet, dass** unter der Annahme eines Startpunktes (Pd) einer Annäherungsflugbahn (T), der vor dem Annäherungsendpunkt (FAF) gelegen ist und der durch Berechnung einer Flugbahn (T1) der Annäherung an eine Position des Drehflügelflugzeugs (1), die vor dem Annäherungsendpunkt (FAF) gelegen ist, definiert ist, die Berechnung der Annäherungsflugbahn (T) gemäß den folgenden Modalitäten ausgeführt wird:

    -) vor dem Überschreiten des Startpunkts (Pd) durch das Drehflügelflugzeug (1) wird die Annäherungsflugbahn (T1) berechnet ausgehend von dem vorderen Endpunkt (Pa) des hinteren Segments (Sav) bis zu dem Startpunkt (Pd) auf der Grundlage einer vorher identifizierten typischen Flugbahn (Tt),
    -) nach dem Überschreiten des Startpunkts (Pd) durch das Drehflügelflugzeug (1), dessen Position als feststehend angenommen wird, wird die Annäherungsflugbahn (T2, T3) berechnet ausgehend von der aktuellen Position des Drehflügelflugzeugs (1) bis zu dem vorderen Endpunkt (Pa) des hinteren Segments (Sav) auf der Grundlage der vorher identifizierten typischen Flugbahn (Tt).

5.  Verfahren nach einem der Ansprüche 1 bis 4,
    **dadurch gekennzeichnet, dass** die Geschwindigkeitseigenschaften und die Richtungseigenschaften des Modells des Windes (V) bestimmt sind durch Ausführung einer Rechenregel (9), die mindestens einen Berechnungsparameter (23) bezüglich der Eigenschaften eines Reliefs berücksichtigt, von dem angenommen wird, dass es den Landepunkt (Pp) umgibt, und unter Berücksichtigung der mindestens durch ein Bordinstrument (11) des Drehflügelflugzeugs (1) gemessenen Windeigenschaften.

6.  Verfahren nach Anspruch 5,
    **dadurch gekennzeichnet, dass** der Wert des Berechnungsparameters (23) standardmäßig definiert wird für eine als eben angenommene Umgebung des Landepunktes (Pp).

7.  Verfahren nach Anspruch 5,
    **dadurch gekennzeichnet, dass** der Wert des Berechnungsparameters (23) standardmäßig abgeleitet wird aus den Windeigenschaften, die jeweils an Bord des Drehflügelflugzeugs (1) und am Landepunkt (Pp) gemessen werden.

8.  Verfahren nach einem der Ansprüche 5 bis 7,
    **dadurch gekennzeichnet, dass** die Eigenschaften des Windmodells (V) berechnet werden, indem unter anderem die am Landepunkt (Pp) gemessenen Windeigenschaften berücksichtigt werden, die von dem Landepunkt (Pp) aus an das Drehflügelflugzeug (1) übertragen werden.

9. Verfahren nach einem der Ansprüche 5 bis 8, **dadurch gekennzeichnet, dass** die Eigenschaften des Windmodells (V) berechnet werden, indem unter anderem die in der Höhe in der Umgebung des Landepunkts (Pp) gemessenen Eigenschaften des Windes berücksichtigt werden, die von dem Landepunkt (Pp) aus an das Drehflügel (1) übertragen werden.

10. Verfahren nach Anspruch 8, **dadurch gekennzeichnet, dass** die Rechenregel (9) ein erstes Berechnungsgesetz der Geschwindigkeit des Windmodells (V) aufweist, wonach:

$$WS(h) = WS_0(h_0) * (h/h_0)^\alpha,$$

worin das erste Berechnungsgesetz WS(h) die Windgeschwindigkeit in einer gegebenen Höhe über Grund h des Drehflügelflugzeugs (1) ist, WSo(ho) die Windgeschwindigkeit am Landepunkt (Pp) in einer Höhe über Grund ho ist, und $\alpha$ der Berechnungsparameter (23) ist.

11. Verfahren nach Anspruch 10, **dadurch gekennzeichnet, dass** das Windmodell (V) bestimmt wird unter der Annahme einer konstanten Windrichtung zwischen dem Landepunkt (Pp) und einer angenommenen aktuellen Position des Drehflügelflugzeugs (1) gemäß Windeigenschaften, die in gleicher Weise an Bord des Drehflügelflugzeugs oder am Landepunkt (Pp) gemessen werden.

12. Verfahren nach Anspruch 10, **dadurch gekennzeichnet, dass** die Rechenregel (9) ein zweites Berechnungsgesetz für die Windrichtung aufweist, wonach die Windrichtung berechnet wird durch Interpolation zwischen mindestens zwei Eigenschaftsmessungen des Windes, die jeweils an Bord des Drehflügelflugzeugs (1) und am Landepunkt (Pp) ausgeführt werden.

13. Verfahren nach einem der Ansprüche 1 bis 12, **dadurch gekennzeichnet, dass** die Grenzneigung (Lh) für ein Drehflügelflugzeug (1) mit vorgegebenem Aufbau definiert ist in Übereinstimmung mit einer Begrenzung einer senkrechten Geschwindigkeit des Drehflügelflugzeugs (1) bezüglich eines ersten vordefinierten Änderungsschwellenwertes der senkrechten Geschwindigkeit, indem der erste Schwellenwert berücksichtigt wird unter Berücksichtigung einer Soll-Fluggeschwindigkeit des Drehflügelflugzeugs (1) am vorderen Endpunkt (Pa) des hinteren Segments (Sav), die bestimmt wird durch die vorher identifizierte typische Flugbahn (Tt) und unter Berücksichtigung der Komponente des Winds, die von vorne auf das Drehflügelflugzeug (1) trifft, deren Eigenschaften durch das Windmodell (V) am vorderen Endpunkt (Pa) des hinteren Segments (Sav) geschätzt werden.

14. Verfahren nach Anspruch 13, **dadurch gekennzeichnet, dass** die Grenzneigung (Lh) insbesondere gemäß den folgenden Rechenmodalitäten definiert ist:

$$Lh = arctg \frac{Vzs_1}{\sqrt{Vair^2 - Vzs_1^2} - Vt},$$

wobei Lh die Grenzneigung, $Vzs_1$ ein erster Geschwindigkeitsschwellenwert, Vair die Reisegeschwindigkeit des Drehflügelflugzeugs und Vt die Komponente des Winds ist, die von vorne auf das Drehflügelflugzeug (1) trifft, betrachtet am vorderen Endpunkt (Pa) des hinteren Segments (Sav).

15. Verfahren nach einem der Ansprüche 1 bis 14, **dadurch gekennzeichnet, dass** das hintere Segment (Sav) für ein Drehflügelflugzeug (1) mit vorgegebenem Aufbau in einem gegebenen Zeitintervall für eine gegebene konstante Neigung vordefiniert ist, wobei der stabilisierte Flug betrachtet wird als ein Vortrieb des Drehflügelflugzeugs (1) mit einer als Null empfundenen Beschleunigung, mit einer konstanten Reisegeschwindigkeit und einer senkrechten Geschwindigkeit des Drehflügelflugzeugs (1), die bezüglich eines zweiten Schwellenwerts der vordefinierten Änderung der senkrechten Geschwindigkeit begrenzt ist.

16. Verfahren nach Anspruch 15, **dadurch gekennzeichnet, dass** der Wert zumindest eines von dem ersten Schwellenwert und dem zweiten Schwellenwert zwischen 500 Fuß/min (152,4 m/min) und 1500 Fuß/min (457,2 m/min) liegt.

17. Verfahren nach einem der Ansprüche 1 bis 16, **dadurch gekennzeichnet, dass** die Steuerung des Drehflügelflugzeugs (1) ausführt:

-) einen Schritt der Gegenüberstellung von aktuellen Informationen, die von den Bordinstrumenten (11) geliefert werden und sich auf eine Änderung der Geschwindigkeit über Grund und auf eine Änderung der aktuellen Höhe über Grund des Drehflügelflugzeugs (1) beziehen, und berechneten Informationen bezüglich einer Änderung der Geschwindigkeit über Grund und einer Änderung der Höhe über Grund, die die Annäherungsflugbahn (T) definieren, und

-) einen Schritt der Änderung der aktuellen Position des Drehflügelflugzeugs (1) durch Steuerung des Drehflügelflugzeugs (1) gemäß einer Anwendung einer Veränderung der Geschwindigkeit über Grund und einer Änderung der Höhe über Grund, die die Annäherungsflugbahn (T) definieren.

18. Verfahren nach Anspruch 17,
**dadurch gekennzeichnet, dass** die Steuerung des Drehflügelflugzeugs (1) durch einen Piloten als Bedienungsperson ausgeführt wird, der manuelle Flugbefehle erzeugt, wobei der Gegenüberstellungsschritt durch eine Anzeige erfolgt.

19. Verfahren nach Anspruch 17,
**dadurch gekennzeichnet, dass** die Steuerung des Drehflügelflugzeugs durch einen Autopiloten erfolgt, wobei der Gegenüberstellungsschritt durch eine Berechnung ausgeführt wird, deren Ergebnis von dem Autopiloten verwertet wird, um automatisierte Flugbefehle zu erzeugen.

20. System zur Berechnung einer Annäherungsflugbahn, welches zur Durchführung des Verfahrens zur Steuerung eines Drehflügelflugzeugs nach einem der Ansprüche 1 bis 19 geeignet ist,
**dadurch gekennzeichnet, dass** das Berechnungssystem aufweist:

    -) eine erste Kommunikationsschnittstelle (5) zwischen einerseits Berechnungsmitteln (2) und andererseits einer Datenbank (3) für aeronautischer Daten und einer Zweit-Datenbank (19),
    -) eine zweite Kommunikationsschnittstelle (7) zwischen den Berechnungsmitteln (2) und Anzeigemitteln (22),
    -) eine dritte Kommunikationsschnittstelle (10) zwischen Berechnungsmitteln (2) und Bordinstrumenten (11) eines Drehflügelflugzeugs (1), die mindestens ein Gerät zur Erfassung der Vortriebsgeschwindigkeit des Drehflügelflugzeugs (1) aufweisen, verbunden mit Mitteln zur Bestimmung von Eigenschaften des Windes, der das Drehflügelflugzeug (1) umweht, ein Satelliten-Navigationssystem und Mittel zur Ermittlung des aktuellen Gewichts des Drehflügelflugzeugs (1), und
    -) eine vierte Kommunikationsschnittstelle (12) zwischen den Berechnungsmitteln (2) und Mitteln (13) zur Fernübertragung von Informationen,
    -) wobei die Berechnungsmittel (2) aufweisen:

      a) einen ersten Rechner (8) zur Bestimmung des Windmodells (V) gemäß Informationen, die mindestens von der dritten Kommunikationsschnittstelle (10), wenn nicht auch von der vierten Kommunikationsschnittstelle (12), übertragen werden,
      b) für einen gegebenen Landepunkt (Pp) und gemäß Befehlen eines Bodenpersonals, die von den Mitteln (13) zur Fernübertragung von Informationen gesendet werden, Mittel (4) zur Auswahl eines Annäherungskurses (R) aus in die Datenbank (3) für aeronautischer Daten aufgenommenen Annäherungskursen (R) durch den Piloten,
      c) einen zweiten Rechner (18) zur Auswahl einer typischen Flugbahn (Tt) aus typischen Flugbahnen (Tt), die in die Zweit-Datenbank (19) aufgenommen sind, gemäß Informationen, die von der ersten Kommunikationsschnittstelle (5) und von der dritten Kommunikationsschnittstelle (10) übertragen werden, und gemäß dem Windmodell (V), das zuvor von dem ersten Rechner (8) bestimmt wurde,
      d) einen dritten Rechner (20) zur Definition der Annäherungsflugbahn (T) gemäß einer vorher ausgewählten typischen Flugbahn (Tt) und gemäß Informationen, die von der dritten Kommunikationsschnittstelle (10) übertragen werden.

21. Drehflügelflugzeug ausgerüstet mit einem Rechensystem nach Anspruch 20.

## Claims

1. A method for guiding a rotorcraft (1) relative to a touchdown point (Pp) in accordance with a landing procedure, said method comprising the following operations:

    -) at least one operation of in-flight selection of a previously identified approach route (R) for the touchdown point (Pp), the approach route (R) being selected from among a plurality of approach routes (R) which are stored by an aeronautical database (3) and associated with identified touchdown points (Pp), the selected approach route (R) defining a ground slope (S) which must not be crossed towards the ground by the rotorcraft (1) from a final approach point (FAF) to a decision point (Pde),
    -) at least one operation of in-flight calculation of an approach trajectory (T) in accordance with the previously selected approach route (R), said operation of calculation of the approach trajectory (T) taking into account a combination of various criteria including at least the ground slope (S) defined by the previously selected approach route (R), the current mass of the rotorcraft (1), and a low-noise criterion relative to a mode of forward progress of the rotorcraft (1) which has been identified as generating low noise relative to a predefined threshold of the noise produced by the rotorcraft (1),

-) at least one operation of identifying a current position of the rotorcraft (1) by onboard instrumentation (11) of the rotorcraft, and

-) an operation of guiding the rotorcraft (1) along the previously calculated approach trajectory (T) by correcting the position of the rotorcraft (1) according to the effects on its forward progress of a variation in the characteristics of the wind which are identified by the onboard instrumentation (11) of the rotorcraft (1),

**characterised in that**, the rotorcraft (1) being provided with a supplementary database (19) storing a plurality of standard trajectories (Tt) which are defined for at least one reference rotorcraft of given structure which corresponds to the structure of the rotorcraft (1) on approach to the touchdown point (Pp), the standard trajectories (Tt) being defined by application of said low-noise criterion in accordance with at least one given ground slope, in accordance with a given mass of the reference rotorcraft and in accordance with a wind criterion relative to the effects produced by a wind of given characteristics on an air mass within which the reference rotorcraft is moving, the method comprises the following operations carried out while the rotorcraft (1) is on approach to the touchdown point (Pp):

-) determining a wind model (V) which is representative of the change in the wind characteristics defined in terms of speed and of direction between a current position of the rotorcraft (1) and the touchdown point (Pp),

-) identifying in the supplementary database (19) at least one standard trajectory (Tt) defined for the rotorcraft (1) relative to its structure, by application of the low-noise criterion in accordance with at least said ground slope (S) of the previously selected approach route (R), in accordance with the current mass of the rotorcraft (1) and in accordance with the previously determined wind model (V), then

-) calculating at least one said approach trajectory (T) starting from a current position of the rotorcraft (1) located upstream from the final approach point (FAF), in accordance with at least three successive segments comprising, in the direction of forward progress of the rotorcraft (1) to the touchdown point (Pp):

a) an upstream segment (Sam), the extension of which is calculated by applying the previously identified standard trajectory (Tt) between a current position of the rotorcraft (1) and a transitional segment (St),

b) a transitional segment (St), extending between a downstream end point (Pm) of the upstream segment (Sam) and an upstream end point (Pa) of a downstream segment (Sav) of the approach trajectory (T), in an authorised flight space (E) for the rotorcraft (1) which is defined between the ground slope (S) and a limit slope (Lh) which passes through the upstream end point (Pa) of the downstream segment (Sav), the transitional segment (St) being calculated by excluding from its extension an application of the standard trajectory (Tt) and by identification of a transitional point (Pt) determined by intersection between on one hand the approach trajectory (T) and on the other hand either one of the ground slope (S) and the limit slope (Lh),

c) said downstream segment (Sav), the extension of which is predefined relative to the decision point (Pde) according to the inherent ability of the rotorcraft (1), during steady flight, to reach the decision point (Pde) from the upstream end point (Pa) of the downstream segment (Sav),

2. A method according to Claim 1, **characterised in that**:

-) the standard trajectory (Tt) is defined by a variation in ground height (H) and by a variation in airspeed (Vair) of the reference rotorcraft relative to an air mass which is considered to surround the reference rotorcraft and is in motion due to the effect of a wind of given characteristics, said variation in ground height (H) and variation in airspeed (Vair) being identified in accordance with the variation of a distance, referred to as "air distance" (Da), relative to a reference point (Pr) on the ground,

-) the approach trajectory (T) is calculated on the basis of the standard trajectory (Tt) identified, by application along the upstream segment (Sam) of said variation in ground height (H) and of a variation in ground speed (Vsol) deduced from said variation in airspeed (Vair) of the standard trajectory (Tt) identified.

3. A method according to Claim 2, **characterised in that** the calculation of the approach trajectory (T) is repeated iteratively in given sequences on the basis of a standard trajectory (Tt) identified at an initial position of the rotorcraft (1) which is located upstream from the final approach point (FAF), taking into account during each of the sequences a current position which is considered of the rotorcraft (1) and correcting the approach trajectory (T) based on the standard trajectory (Tt) according to a current wind model (V) determined at said current position which is considered of the rotorcraft (1).

4. A method according to any one of Claims 1 to 3, **characterised in that**, considering a starting point (Pd) of an approach trajectory (T) which is located upstream from the final approach point (FAF) and is defined by calculating an approach trajectory (T1) at a position of the rotorcraft (1) which is located upstream from the final approach point (FAF), the calculation of the approach trajectory (T) is effected according to the following methods:

   -) prior to the rotorcraft (1) crossing the starting point (Pd), the approach trajectory (T1) is calculated from the upstream end point (Pa) of the downstream segment (Sav) to the starting point (Pd) on the basis of a previously identified standard trajectory (Tt),
   -) after the rotorcraft (1) has crossed the starting point (Pd), the position of which is then considered to be fixed, the approach trajectory (T2, T3) is calculated from the current position of the rotorcraft (1) to the upstream end point (Pa) of the downstream segment (Sav) on the basis of said previously identified standard trajectory (Tt).

5. A method according to any one of Claims 1 to 4, **characterised in that** the characteristics of speed and of direction of the wind model (V) are determined by implementing a calculation rule (9) which takes into account at least one calculation parameter (23) relative to the characteristics of a terrain which is considered to surround the touchdown point (Pp) and taking into account the characteristics of the wind which are measured at least by onboard instrumentation (11) of the rotorcraft (1).

6. A method according to Claim 5, **characterised in that** the value of the calculation parameter (23) is defined by default in accordance with an environment of the touchdown point (Pp) which is considered to be flat.

7. A method according to Claim 5, **characterised in that** the value of the calculation parameter (23) is deduced by default according to the characteristics of the wind measured on board the rotorcraft (1) and at the touchdown point (Pp) respectively.

8. A method according to any one of Claims 5 to 7, **characterised in that** the characteristics of the wind model (V) are calculated furthermore taking into account the characteristics of the wind which are measured at the touchdown point (Pp) and are transmitted to the rotorcraft (1) from the touchdown point (Pp).

9. A method according to any one of Claims 5 to 8. **characterised in that** the characteristics of the wind model (V) are calculated furthermore taking into account the characteristics of the wind which are measured at altitude within the environment of the touchdown point (Pp) and are transmitted to the rotorcraft (1) from the touchdown point.

10. A method according to Claim 8, **characterised in that** the calculation rule (9) comprises a first calculation law for the speed of the wind model (V) according to which:

$$WS(h) = WS_0(h_0) * (h/h_0)^\alpha$$

in which first calculation law WS(h) is the speed of the wind at a given ground height h of the rotorcraft (1), $WS_0(h_0)$ is the speed of the wind at the touchdown point (Pp) at a ground height $h_0$, and $\alpha$ is said calculation parameter (23).

11. A method according to Claim 10, **characterised in that** the wind model (V) is determined by considering as constant a wind direction between the touchdown point (Pp) and a current position which is considered of the rotorcraft (1) in accordance with the characteristics of the wind which are measured equally well on board the rotorcraft (1) or at the touchdown point (Pp).

12. A method according to Claim 10, **characterised in that** the calculation rule (9) comprises a second calculation law for the wind direction, according to which the wind direction is calculated by interpolation between at least two measurements of the wind characteristics which are carried out on board the rotorcraft (1) and at the touchdown point (Pp) respectively.

13. A method according to any one of Claims 1 to 12, **characterised in that** the limit slope (Lh) is defined for a rotorcraft (1) of given structure in accordance with a limitation of a vertical speed of the rotorcraft (1) in relation to a predefined first threshold for a variation in vertical speed, taking into account said first threshold, taking into account a set airspeed of the rotorcraft (1) at the upstream end point (Pa) of the downstream segment (Sav) determined by the previously identified standard trajectory (Tt) and taking into account the headwind component for the rotorcraft (1), the characteristics of which are estimated by the wind model (V) at the upstream end point (Pa) of the downstream segment (Sav).

**14.** A method according to Claim 13,
**characterised in that** the limit slope (Lh) is more particularly defined in accordance with the following calculation methods:

$$Lh = arctg \frac{Vzs_1}{\sqrt{Vair^2 - Vzs_1^2} - Vt}$$

in which calculation methods $Lh$ is the limit slope, $Vzs_l$ is the first speed threshold, $Vair$ is the airspeed of the rotorcraft and $Vt$ is said headwind component for the rotorcraft (1) which are considered at the upstream end point (Pa) of the downstream segment (Sav).

**15.** A method according to any one of Claims 1 to 14,
**characterised in that** the downstream segment (Sav) is predefined for a rotorcraft (1) of given structure over a given period for a given constant slope, said steady flight being considered as being a forward progress of the rotorcraft (1) at an acceleration perceived to be zero with a constant airspeed and a vertical speed of the rotorcraft (1) which is limited with respect to a predefined second threshold for a variation in vertical speed.

**16.** A method according to Claim 15,
**characterised in that** the value of any one at least of the first threshold and the second threshold is of between 500 ft/min and 1500 ft/min.

**17.** A method according to any one of Claims 1 to 16,
**characterised in that** the operation of guiding the rotorcraft (1) implements:

-) an operation of comparing current information provided by the onboard instrumentation (11) and relating to a variation in the current ground speed and to a variation in the current ground height of the rotorcraft (1), and calculated information relating to a variation in the ground speed and to a variation in the ground height defining the approach trajectory (T), and
-) an operation of modifying the current position of the rotorcraft (1) by guiding the rotorcraft (1) in accordance with the application of a variation in the ground speed and of a variation in the ground height defining the approach trajectory (T).

**18.** A method according to Claim 17,
**characterised in that**, the guiding of the rotorcraft (1) being carried out by a human pilot generating manual flight commands, said comparison operation is effected by means of a display.

**19.** A method according to Claim 17,
**characterised in that** the guiding of the rotorcraft (1) being carried out by an automatic pilot, said comparison operation is effected by calculation, the result of which is used by the automatic pilot to generate automated flight commands.

**20.** A system for calculating an approach trajectory suitable for implementing a method for guiding a rotorcraft according to any one of Claims 1 to 19,
**characterised in that** the calculation system comprises:

-) a first communications interface (5) between on one hand calculation means (2) and on the other hand a said aeronautical database (3) and a said supplementary database (19),
-) a second communications interface (7) between the calculation means (2) and display means (22),
-) a third communications interface (10) between the calculation means (2) and onboard instrumentation (11) of a rotorcraft (1) comprising at least one apparatus for detecting the forward speed of the rotorcraft (1) associated with means for determining the characteristics of the wind surrounding the rotorcraft (1), a satellite navigation system, and means for evaluating the current mass of the rotorcraft (1) and,
-) a fourth communications interface (12) between the calculation means (2) and remote data transmission means (13),
-) said calculation means (2) comprising:

a) a first calculator (8) for determining the wind model (V) in accordance with the information transmitted at least by the third communications interface (10) if not also by the fourth communications interface (12),
b) for a given touchdown point (Pp) and in accordance with instructions from ground personnel transmitted by said remote data transmission means (13), means for selection (4), by a pilot (6), of an approach route (R) from among the approach routes (R) stored in the aeronautical database (3),
c) a second calculator (18) for selecting a standard trajectory (Tt) from among the standard trajectories (Tt) stored in the supplementary database (19), in accordance with the information transmitted by the first communications interface (5) and by the third communications interface (10), and in accordance with the wind model (V) previously determined by the first calculator (8),
d) a third calculator (20) for defining the approach trajectory (T) in accordance with a previously selected standard trajectory (Tt) and in accordance with the information transmitted by the third communications interface (10).

21. A rotorcraft equipped with a calculation system according to Claim 20.

fig.1

fig.2

fig.3

(a)

(b)

fig.4

(c)

(d)

fig.5

fig.6

fig.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1730032 A
- EP 0945841 A

- JP 2736045 B
- US 2012296499 A, KIRCHHOFER Alain